# EUROPEAN PATENT APPLICATION

(11) **EP 4 848 092 A1**
(43) Date of publication of application: **02.12.2026**
(21) Application number: 24920642.6
(22) Date of filing: 26.01.2024
(51) Int. Cl.: G06F 11/20, G06F 11/30, G06F 9/455, B60W 50/029, B60W 60/00, B60W 40/02, B60K 35/81

(54) **SIGNAL PROCESSING DEVICE, AND VEHICLE DISPLAY DEVICE COMPRISING SAME**

(71) Applicant: LG Electronics Inc., Yeongdeungpo-gu Seoul 07336 (KR)
(72) Inventor: KIM, Sangheon, Seoul 06772 (KR); YU, Eunhye, Seoul 06772 (KR); LEE, Jooyoung, Seoul 06772 (KR); JUNG, Junyoung, Seoul 06772 (KR); LEE, Chulhee, Seoul 06772 (KR)
(74) Representative: Vossius & Partner Patentanwälte Rechtsanwälte mbB
(86) International application number: PCT/KR2024/001303
(87) International publication number: WO 2025/159225

(57) **Abstract**

A signal processing device and a vehicle display device including the same according to one embodiment of the present disclosure include a processor configured to execute a hypervisor, wherein the processor is configured to execute, on the hypervisor, a perception service configured to perform perception based on sensor data and a safety monitor service configured to monitor the perception service, and performs a recovery mode based on a redundant perception service while executing the perception service. Accordingly, the stability of the perception service can be improved.

## Description

### BACKGROUND

### 1. Technical Field

The present disclosure relates to a signal processing device and a vehicle display apparatus including the same, and more particularly, to a signal processing device capable of improving the stability of a perception service and a vehicle display apparatus including the same.

### 2. Description of the Related Art

A vehicle is a machine that allows a user to move in a desired direction. A typical example of the vehicle is an automobile.

Meanwhile, a signal processing device for vehicles is mounted in the vehicle for convenience of users who use the vehicle.

The signal processing device inside a vehicle receives and processes sensor data from various sensor devices inside.

Meanwhile, the types and number of sensors installed in vehicles have increased due to driver assistance systems (ADAS) or autonomous driving, the amount of data to be processed is also on the rise.

Meanwhile, in relation to driver assistance systems (ADAS) or autonomous driving, when applications and the like are executed, there is a possibility of malfunction due to a defect or failure, and such malfunctions can increase the likelihood of vehicle accidents.

### SUMMARY

It is an objective of the present disclosure to provide a signal processing device capable of improving the stability of a perception service and a vehicle display apparatus including the same.

It is another objective of the present disclosure to provide a signal processing device capable of enhancing the usability of a perception service based on sensor data and a vehicle display apparatus including the same.

It is another objective of the present disclosure to provide a signal processing device capable of efficiently performing data processing using microservices and a vehicle display apparatus including the same.

An embodiment of the present disclosure provides a signal processing device and a vehicle display apparatus including the same, the signal processing device comprising a processor configured to execute a hypervisor, wherein the processor is configured to execute, on the hypervisor, a perception service configured to perform perception based on sensor data and a safety monitor service configured to monitor the perception service, and execute a recovery mode based on a redundant perception service while executing the perception service.

Meanwhile, the safety monitor service can be configured to operate the redundant perception service during operation of the perception service, and, upon occurrence of a failure in the perception service, transmit a recovery command to the perception service and an activity command to the redundant perception service.

Meanwhile, the safety monitor service can be configured to pause the redundant perception service during operation of the perception service, and, upon occurrence of a failure in the perception service, transmit a recovery command to the perception service and an activity command to the redundant perception service.

Meanwhile, the safety monitor service can be configured to control switching between the perception service and the redundant perception service based on monitoring data or analysis data from the perception service or the redundant perception service.

Meanwhile, the safety monitor service can be configured to change criteria for switching between the perception service and the redundant perception service based on monitoring data or analysis data from the perception service or the redundant perception service.

Meanwhile, the safety monitor service can be configured to update a monitoring module or management module within the perception service or the redundant perception service.

Meanwhile, the processor can be configured to change a mode for planning or control of vehicle operation based on a confidence level.

Meanwhile, the processor can be configured to execute a normal mode, a degradation mode, an emergency mode, or a manual driving mode is executed, based on a confidence level.

Meanwhile, the processor can be configured to perform the perception service for autonomous driving, assisted vehicle driving, or driver monitoring based on the sensor data.

Meanwhile the processor can be configured to perform the perception service for active steering, lane keeping, emergency braking, automatic lane change, or traffic jam pilot based on the sensor data.

Meanwhile, the processor can be configured to execute localization based on a vehicle driving condition, weather information, and the sensor data, execute the perception service based on the localization, execute planning based on the perception service, and output a vehicle control signal based on the planning.

Meanwhile, the perception service can correspond to one of a plurality of microservices for application execution.

Meanwhile, the perception service can correspond to a microservice for performing object detection, object tracking, lane detection, or lane keeping.

Meanwhile, the processor can be configured to switch from a normal mode to a degradation mode based on the perception service or execute an emergency mode or manual driving mode based on a take-over request during execution of the degradation mode.

Meanwhile, the processor can be configured to stop the vehicle after performing an emergency mode based on a take-over request during execution of a degradation mode, based on the perception service.

Meanwhile, the processor can be configured to perform object detection or object tracking based on the perception service.

Meanwhile, the processor can be configured to execute a fail-safe mode, a degradation mode, or a fail-operation mode based on the perception service.

Meanwhile, the processor can be configured to execute a fail-safe mode in response to no monitoring signal being received during execution of an autonomous driving mode, to execute a degradation mode in response to the fail-safe mode falling, and to perform an alternative operation or stop the vehicle after the degradation mode.

Meanwhile, the processor can be configured to reset components in the fail-safe mode.

Meanwhile, the processor can be configured to reduce the vehicle speed or make steering adjustments in the degradation mode.

### EFFECTS OF THE DISCLOSURE

A signal processing device and a vehicle display device including the same according to one embodiment of the present disclosure include a processor configured to execute a hypervisor, wherein the processor is configured to execute, on the hypervisor, a perception service configured to perform perception based on sensor data and a safety monitor service configured to monitor the perception service, and performs a recovery mode based on a redundant perception service while executing the perception service. Accordingly, it is possible to improve the stability of the sensor data-based perception service. Furthermore, it is possible to enhance the usability of the sensor data-based perception service.

Meanwhile, the safety monitor service can be configured to operate the redundant perception service during operation of the perception service, and, upon occurrence of a failure in the perception service, transmit a recovery command to the perception service and an activity command to the redundant perception service. Accordingly, it is possible to improve the stability of the sensor data-based perception service.

Meanwhile, the safety monitor service can be configured to pause the redundant perception service during operation of the perception service, and, upon occurrence of a failure in the perception service, transmit a recovery command to the perception service and a start command to the redundant perception service. Accordingly, it is possible to improve the stability of the sensor data-based perception service.

Meanwhile, the safety monitor service can be configured to switch between the perception service and the redundant perception service based on monitoring data or analysis data from the perception service or the redundant perception service. Accordingly, it is possible to improve the stability of the sensor data-based perception service.

Meanwhile, the safety monitor service can be configured to change criteria for switching between the perception service and the redundant perception service based on monitoring data or analysis data from the perception service or the redundant perception service. Accordingly, it is possible to improve the stability of the sensor data-based perception service.

Meanwhile, the safety monitor service can be configured to update a monitoring module or management module within the perception service or the redundant perception service. Accordingly, it is possible to improve the stability of the sensor data-based perception service.

Meanwhile, the processor can be configured to change a mode for planning or control of vehicle operation based on a confidence level. Accordingly, it is possible to improve the stability of the sensor data-based perception service based on the confidence level.

Meanwhile, the processor can be configured to execute a normal mode, a degradation mode, an emergency mode, or a manual driving mode based on a confidence level. Accordingly, it is possible to improve the stability of the sensor data-based perception service based on the confidence level.

Meanwhile, the processor can be configured to perform the perception service for autonomous driving, assisted vehicle driving, or driver monitoring based on the sensor data. Accordingly, the usability of the perception service can be enhanced.

Meanwhile, the processor can be configured to perform the perception service for active steering, lane keeping, emergency braking, automatic lane change, or traffic jam pilot based on the sensor data. Accordingly, the usability of the perception service can be enhanced.

Meanwhile, the processor can be configured to execute localization based on a vehicle driving condition, weather information, and the sensor data, execute the perception service based on the localization, execute planning based on the perception service, and output a vehicle control signal based on the planning. Accordingly, the usability of the perception service can be enhanced to respond to various situations.

Meanwhile, the perception service can correspond to one of a plurality of microservices for application execution. Accordingly, the perception service can be performed efficiently.

Meanwhile, the perception service can correspond to a microservice for performing object detection, object tracking, lane detection, or lane keeping. Accordingly, the perception service can be performed efficiently.

Meanwhile, the processor can be configured to switch from a normal mode to a degradation mode based on the perception service or execute an emergency mode or manual driving mode based on a take-over request during execution of the degradation mode. Accordingly, the usability of the perception service can be enhanced.

Meanwhile, the processor can be configured to stop the vehicle after performing an emergency mode based on a take-over request during execution of a degradation mode, based on the perception service. Accordingly, the usability of the perception service can be enhanced.

Meanwhile, the processor can be configured to perform object detection or object tracking based on the perception service. Accordingly, the usability of the perception service can be enhanced.

Meanwhile, the processor can be configured to execute a fail-safe mode, a degradation mode, or a fail-operation mode based on the perception service. Accordingly, the usability of the perception service can be enhanced.

Meanwhile, the processor can be configured to execute a fail-safe mode in response to no monitoring signal being received during execution of an autonomous driving mode, to execute a degradation mode in response to the fail-safe mode falling, and to perform an alternative operation or stop the vehicle after the degradation mode. Accordingly, the usability of the perception service can be enhanced.

Meanwhile, the processor can be configured to reset components in the fail-safe mode. Accordingly, the usability of the perception service can be enhanced.

Meanwhile, the processor can be configured to reduce the vehicle speed or make steering adjustments in the degradation mode. Accordingly, the usability of the perception service can be enhanced.

### BRIEF DESCRIPTION OF THE DRAWINGS

FIG. 1 is a diagram illustrating an example of the exterior and interior of a vehicle;
FIG. 2 is a diagram illustrating various architectures of a vehicle communication gateway;
FIG. 3A is a diagram illustrating an example of a vehicle display apparatus in a vehicle;
FIG. 3B is a diagram illustrating another example of a vehicle display apparatus in a vehicle;
FIG. 4 is an internal block diagram illustrating an example of a vehicle display apparatus of FIG. 3B;
FIGS. 5A to 5D are diagrams illustrating various examples of a vehicle display apparatus;
FIG. 6 is a block diagram illustrating an example of a vehicle display apparatus according to an embodiment of the present disclosure;
FIGS. 7A to 7B are diagrams referenced in the description of a signal processing device related to the present disclosure.
FIGS. 8A to 8E are diagrams illustrating various examples of execution of a microservice according to an embodiment of the present disclosure.
FIG. 9 is an example of an internal block diagram of a signal processing device according to an embodiment of the present disclosure.
FIG. 10 is an example of an internal block diagram of a signal processing device according to another embodiment of the present disclosure.
FIG. 11 is a diagram illustrating an operation of a vehicle signal processing device according to an embodiment of the present disclosure.
FIGS. 12A to 19B are diagrams referenced in the description of the operation of FIG. 11.
FIG. 20 is an exemplary flowchart illustrating an operation method for a signal processing device according to an embodiment of the present disclosure.
FIG. 21 is a diagram referenced in the description of FIG. 20.

### DETAILED DESCRIPTION

Hereinafter, the present disclosure will be described in detail with reference to the accompanying drawings.

With respect to constituent elements used in the following description, suffixes "module" and "unit" are given only in consideration of ease in preparation of the specification, and do not have or serve different meanings. Accordingly, the suffixes "module" and "unit" can be used interchangeably.

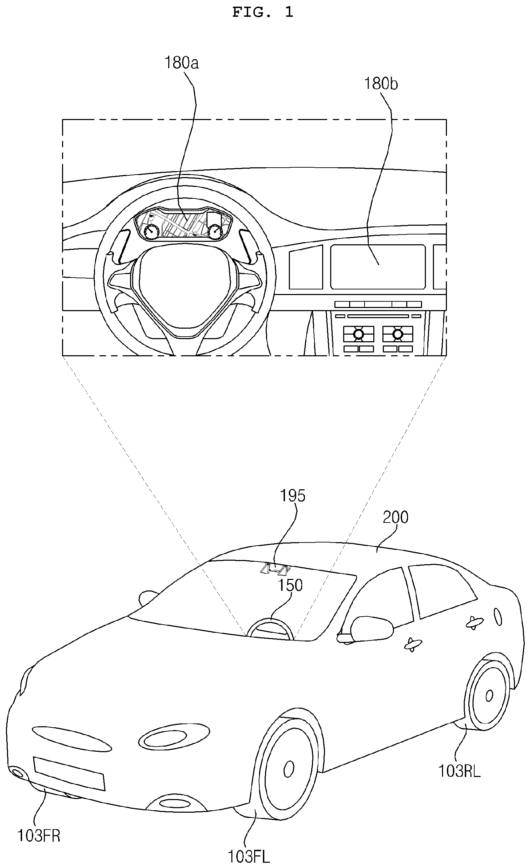

FIG. 1 is a diagram illustrating an example of the exterior and interior of a vehicle.

Referring to the figure, the vehicle 200 is moved by a plurality of wheels 103FR, 103FL, 103RL,... rotated by a power source and a steering wheel 150 configured to adjust an advancing direction of the vehicle 200.

Meanwhile, the vehicle 200 can be provided with a camera 195 configured to acquire an image of the front of the vehicle.

Meanwhile, the vehicle 200 can be further provided therein with a plurality of displays 180a and 180b configured to display images and information.

In FIG. 1, a cluster display 180a and an audio video navigation (AVN) display 180b are illustrated as the plurality of displays 180a and 180b. In addition, a head up display (HUD) can also be used.

Meanwhile, the audio video navigation (AVN) display 180b can also be called a center information display.

Meanwhile, the vehicle 200 described in this specification can be a concept including all of a vehicle having an engine as a power source, a hybrid vehicle having an engine and an electric motor as a power source, and an electric vehicle having an electric motor as a power source.

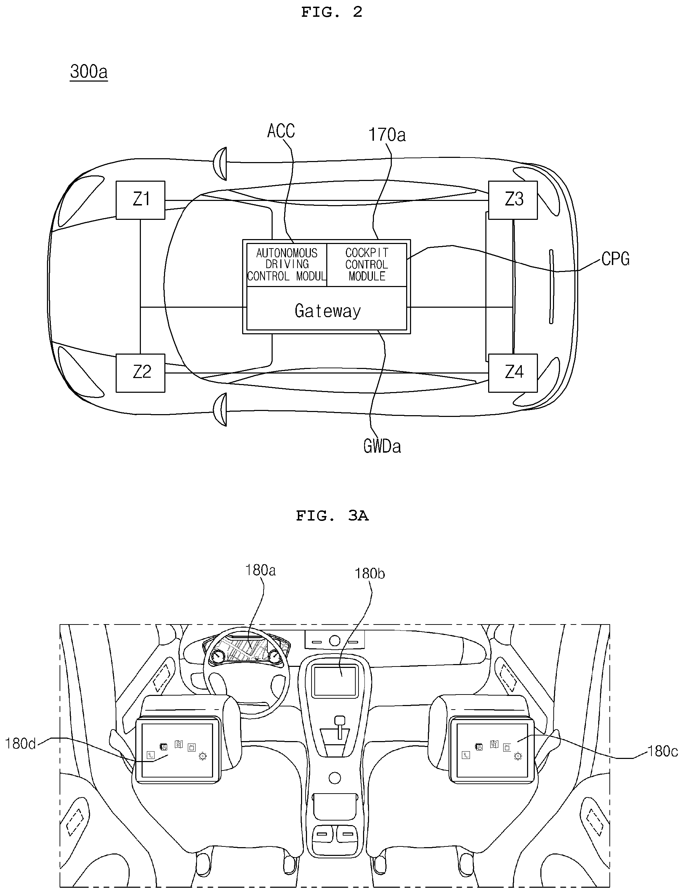

FIG. 2 is a diagram illustrating various architectures of a vehicle communication gateway.

First, FIG. 2 is a diagram illustrating a first architecture of a vehicle communication gateway.

Referring to the drawing, a first architecture 300a can correspond to a zone-based architecture.

Accordingly, vehicle internal sensor devices and processors can be mounted in each of a plurality of zones Z1 to Z4, and a signal processing device 170a including a vehicle communication gateway GWDa can be disposed at the center of the plurality of zones Z1 to Z4.

Meanwhile, the signal processing device 170a can further include an autonomous driving control module ACC, a cockpit control module CPG, etc., in addition to the vehicle communication gateway GWDa.

The vehicle communication gateway GWDa in the signal processing device 170a can be a High Performance Computing (HPC) gateway.

That is, as an integrated HPC gateway, the signal processing device 170a of FIG. 2 can exchange data with an external communication module (not shown) or processors (not shown) in the plurality of zones Z1 to Z4.

FIG. 3A is a diagram illustrating an example of a vehicle display apparatus in a vehicle.

Referring to the figure, a cluster display 180a, an audio video navigation (AVN) display 180b, rear seat entertainment displays 180c and 180d, and a rear-view mirror display (not shown) can be mounted in the vehicle.

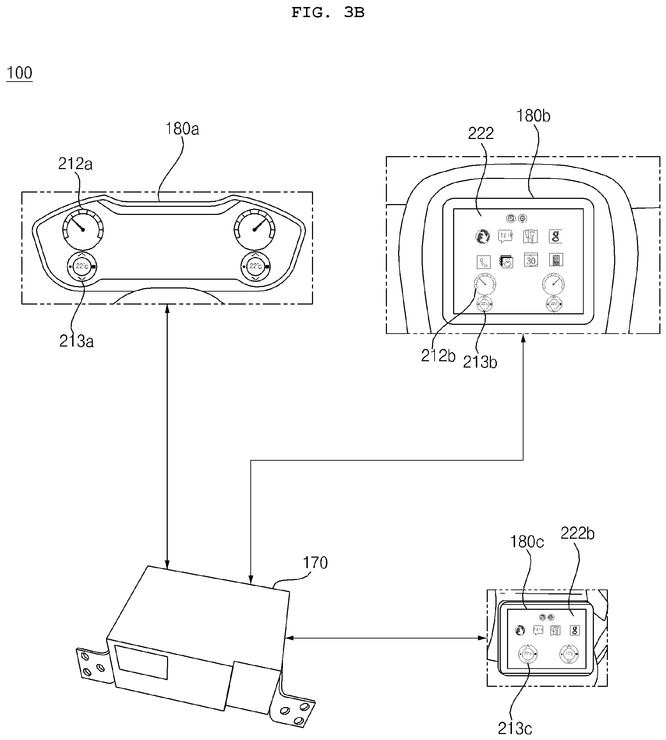

FIG. 3B is a diagram illustrating another example of a vehicle display apparatus in a vehicle.

A vehicle display apparatus 100 according to an embodiment of the present disclosure can include a plurality of displays 180a and 180b and a signal processing device 170 configured to perform signal processing in order to display images and information on the plurality of displays 180a and 180b, and to output an image signal to at least one of the displays 180a and 180b.

The first display 180a, which corresponds to one of the plurality of displays 180a and 180b, can be a cluster display 180a configured to display a driving state and operation information, and the second display 180b can be an audio video navigation (AVN) display 180b configured to display vehicle driving information, a navigation map, various kinds of entertainment information, or an image.

The signal processing device 170 can have a processor 175 provided therein, and first to third virtual machines (not shown) can be executed by a hypervisor 505 in the processor 175.

The second virtual machine (not shown) can be operated for the first display 180a, and the third virtual machine (not shown) can be operated for the second display 180b.

Meanwhile, the first virtual machine (not shown) in the processor 175 can be configured to set a shared memory 508 based on the hypervisor 505 for transmission of the same data to the second virtual machine (not shown) and the third virtual machine (not shown). Consequently, the first display 180a and the second display 180b in the vehicle can display the same information or the same images in a synchronized state.

Meanwhile, the first virtual machine (not shown) in the processor 175 shares at least some of data with the second virtual machine (not shown) and the third virtual machine (not shown) for divided processing of data. Consequently, the plurality of virtual machines for the plurality of displays in the vehicle can divide and process data.

Meanwhile, the first virtual machine (not shown) in the processor 175 can receive and process wheel speed sensor data of the vehicle, and can be configured to transmit the processed wheel speed sensor data to at least one of the second virtual machine (not shown) or the third virtual machine (not shown). Consequently, at least one virtual machine can share the wheel speed sensor data of the vehicle.

Meanwhile, the vehicle display apparatus 100 according to an embodiment of the present disclosure can further include a rear seat entertainment (RSE) display 180c configured to display driving state information, simple navigation information, various kinds of entertainment information, or an image.

The signal processing device 170 can further execute a fourth virtual machine (not shown), in addition to the first to third virtual machines (not shown), on the hypervisor 505 in the processor 175 to control the RSE display 180c.

Consequently, it is possible to control various displays 180a to 180c using a single signal processing device 170.

Meanwhile, some of the plurality of displays 180a to 180c can be operated based on a Linux Operating System (OS), and others can be operated based on a Web Operating System (OS).

The signal processing device 170 according to an embodiment of the present disclosure can be configured to display the same information or the same images in a synchronized state on the displays 180a to 180c to be operated under various operating systems.

Meanwhile, FIG. 3B illustrates an example in which a vehicle speed indicator 212a and a vehicle internal temperature indicator 213a are displayed on a first display 180a, a home screen 222 including a plurality of applications, a vehicle speed indicator 212b, and a vehicle internal temperature indicator 213b is displayed on a second display 180b, and a second home screen 222b including a plurality of applications and a vehicle internal temperature indicator 213c is displayed on a third display 180c.

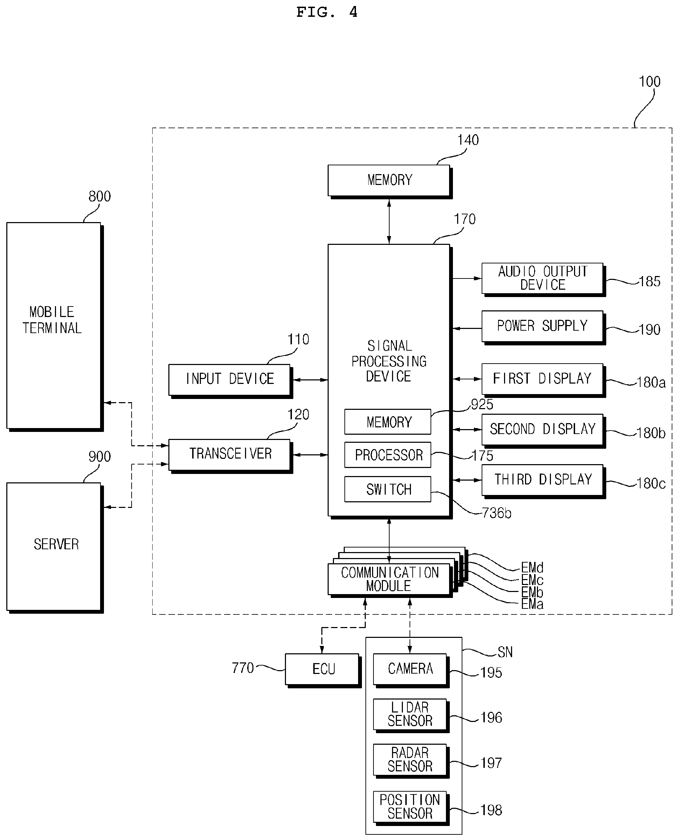

FIG. 4 is an internal block diagram illustrating an example of the vehicle display apparatus of FIG. 3B.

Referring to FIG. 4, a vehicle display apparatus 100 according to an embodiment of the present disclosure can include an input device 110, a transceiver 120 for communication with an external device, a plurality of communication modules EMa to EMd for internal communication, a memory 140, the signal processing device 170, a plurality of displays 180a to 180c, an audio output device 185, and a power supply 190.

The plurality of communication modules EMa to EMd can be disposed in a plurality of zones Z1 to Z4, respectively, in FIG. 2.

Meanwhile, the signal processing device 170 can be provided therein with a communication switch 736b for data communication with the respective communication modules EM1 to EM4.

The respective communication modules EM1 to EM4 can be configured to perform data communication with the plurality of sensor devices SN or the ECU 770.

Meanwhile, a plurality of sensor devices SN can include a camera 195, a lidar sensor 196, a radar sensor 197, or a position sensor 198.

The input device 110 can include a physical button or pad for button input or touch input.

Meanwhile, the input device 110 can include a microphone (not shown) for user voice input.

The transceiver 120 can wirelessly exchange data with a mobile terminal 800 or a server 900.

In particular, the transceiver 120 can wirelessly exchange data with a mobile terminal of a vehicle driver. Any of various data communication schemes,, such as Bluetooth, Wi-Fi, WIFI Direct, and APIX, can be used as a wireless data communication scheme.

The transceiver 120 can receive weather information and road traffic state information,, such as Transport Protocol Experts Group (TPEG) information, from a mobile terminal 800 or a server 900. To this end, the transceiver 120 can include a mobile communication module (not shown).

The plurality of communication modules EM1 to EM4 can receive sensor data and the like from the electronic control unit (ECU) 770 or the sensor device SN or a zonal signal processing device 170Z, and can be configured to transmit the received sensor data to the signal processing device 170.

Here, the sensor data can include at least one of vehicle direction data, vehicle position data (global positioning system (GPS) data), vehicle angle data, vehicle speed data, vehicle acceleration data, vehicle inclination data, vehicle forward/backward movement data, battery data, fuel data, tire data, vehicle lamp data, vehicle internal temperature data, and vehicle internal humidity data.

The sensor data can be acquired from a heading sensor, a yaw sensor, a gyro sensor, a position sensor, a vehicle forward/backward movement sensor, a wheel sensor, a vehicle speed sensor, a car body inclination sensor, a battery sensor, a fuel sensor, a tire sensor, a steering-wheel-rotation-based steering sensor, a vehicle internal temperature sensor, or a vehicle internal humidity sensor.

Meanwhile, the position module can include a GPS module configured to receive GPS information or a position sensor 198.

Meanwhile, at least one of the plurality of communication modules EM1 to EM4 can be configured to transmit position information data sensed by the GPS module or the position sensor 198 to the signal processing device 170.

Meanwhile, at least one of the plurality of communication modules EM1 to EM4 can receive front image data of the vehicle, side-of-vehicle image data, rear image data of the vehicle, and obstacle-around-vehicle distance information from the camera 195, the lidar sensor 196, or the radar sensor 197, etc., and can be configured to transmit the received information to the signal processing device 170.

The memory 140 can store various data necessary for overall operation of the vehicle display apparatus 100,, such as programs for processing or control of the signal processing device 170.

For example, the memory 140 can store data about the hypervisor and first to third virtual machines executed by the hypervisor in the processor 175.

The audio output device 185 can convert an electrical signal from the signal processing device 170 into an audio signal, and can output the audio signal. To this end, the audio output device 185 can include a speaker.

The power supply 190 can supply power necessary to operate components under control of the signal processing device 170. In particular, the power supply 190 can receive power from a battery in the vehicle.

The signal processing device 170 can control the overall operation of each device in the vehicle display apparatus 100.

For example, the signal processing device 170 can include a processor 175 configured to perform signal processing for the vehicle displays 180a and 180b.

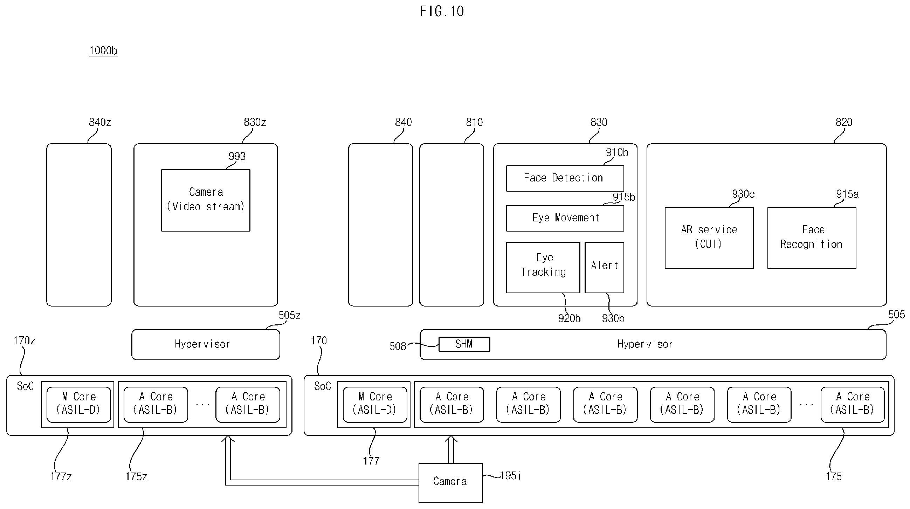

The processor 175 can be configured to execute the first to third virtual machines (not shown) on the hypervisor 505 (see FIG. 10) in the processor 175.

Among the first to third virtual machines (not shown) (see FIG. 10), the first virtual machine (not shown) can be called a server virtual machine, and the second and third virtual machines (not shown) and (not shown) can be called guest virtual machines.

For example, the first virtual machine (not shown) in the processor 175 can receive sensor data from the plurality of sensor devices,, such as vehicle sensor data, position information data, camera image data, audio data, or touch input data, and can process and output the received sensor data.

As described above, the first virtual machine (not shown) can process most of the data, whereby 1:N data sharing can be achieved.

In another example, the first virtual machine (not shown) can directly receive and process can data, Ethernet data, audio data, radio data, USB data, and wireless communication data for the second and third virtual machines (not shown).

Further, the first virtual machine (not shown) can be configured to transmit the processed data to the second and third virtual machines (not shown).

Accordingly, only the first virtual machine (not shown), among the first to third virtual machines (not shown), can receive sensor data from the plurality of sensor devices, communication data, or external input data, and can be configured to perform signal processing, whereby load in signal processing by the other virtual machines can be reduced and 1:N data communication can be achieved, and therefore synchronization at the time of data sharing can be achieved.

Meanwhile, the first virtual machine (not shown) can be configured to write data in the shared memory 508, whereby the second virtual machine (not shown) and the third virtual machine (not shown) share the same data.

For example, the first virtual machine (not shown) can be configured to write vehicle sensor data, the position information data, the camera image data, or the touch input data in the shared memory 508, whereby the second virtual machine (not shown) and the third virtual machine (not shown) share the same data. Consequently, 1:N data sharing can be achieved.

Eventually, the first virtual machine (not shown) can process most of the data, whereby 1:N data sharing can be achieved.

Meanwhile, the first virtual machine (not shown) in the processor 175 can be configured to set the shared memory 508 based on the hypervisor 505 in order to transmit the same data to the second virtual machine (not shown) and the third virtual machine (not shown).

Meanwhile, the signal processing device 170 can process various signals,, such as an audio signal, an image signal, and a data signal. To this end, the signal processing device 170 can be implemented in the form of a system on chip (SOC).

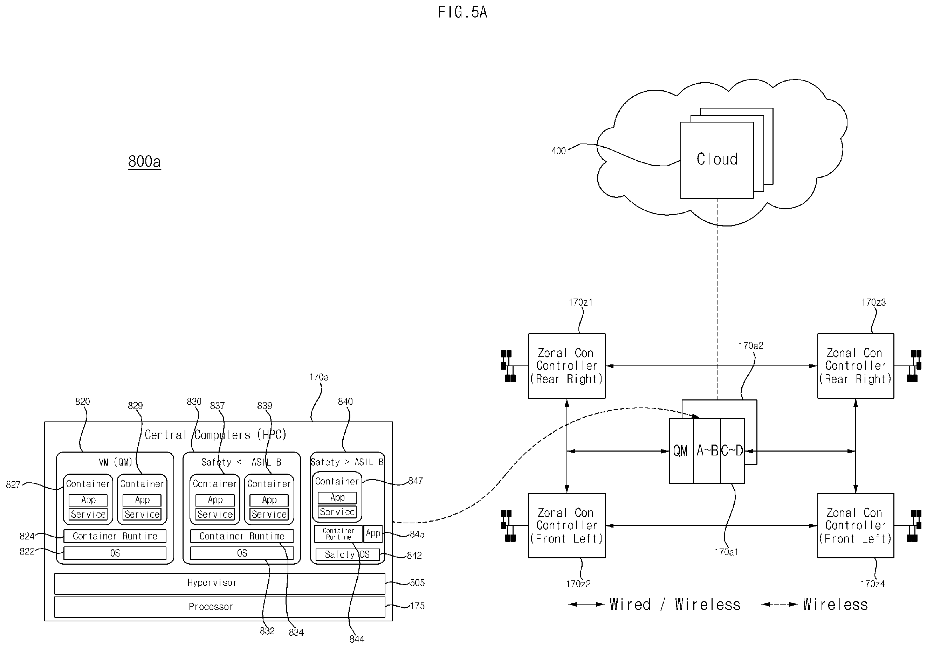

Meanwhile, the signal processing device 170 in the display apparatus 100 of FIG. 4 can be the same as signal processing devices 170, 170a1, and 170a2 of a vehicle display apparatus of FIG. 5A and subsequent figures.

FIGS. 5A to 5D are diagrams illustrating various examples of a vehicle display apparatus.

FIG. 5A is a diagram illustrating an example of a vehicle display apparatus according to an embodiment of the present disclosure.

Referring to FIG. 5A, a vehicle display apparatus 800a according to an embodiment of the present disclosure includes signal processing devices 170a1 and 170a2 and a plurality of zonal signal processing devices 170Z1 to 170Z4.

Meanwhile, two signal processing devices 170a1 and 170a2 are illustrated in the figure, which are provided for backup and the like, and one signal processing device is also possible.

Meanwhile, the signal processing devices 170a1 and 170a2 can be referred to as a High Performance Computing (HPC) signal processing devices.

The plurality of zonal signal processing devices 170Z1 to 170Z4 can be located in the respective zones Z1 to Z4 and can be configured to transmit sensor data to the signal processing devices 170a1 and 170a2.

The signal processing devices 170a1 and 170a2 can receive data by wire from the plurality of zonal signal processing devices 170Z1 to 170Z4 or a communication device 120.

In the drawing, an example is illustrated in which the signal processing devices 170a1 and 170a2 exchange data with the plurality of zonal signal processing devices 170Z1 to 170Z4 based on wired communication, and the signal processing devices 170a1 and 170a2 exchange data with the server 400 based on wireless communication, but the communication device 120 can exchange data with the server 400 based on wireless communication, and the signal processing devices 170a1 and 170a2 can exchange data with the communication device 120 based on wired communication.

Meanwhile, the data received by the signal processing devices 170a1 and 170a2 can include camera data or sensor data.

For example, the vehicle internal sensor data can include at least one of vehicle wheel speed data, vehicle direction data, vehicle location data (global positioning system (GPS) data), vehicle angle data, vehicle speed data, vehicle acceleration data, vehicle inclination data, vehicle forward/backward movement data, battery data, fuel data, tire data, vehicle lamp data, vehicle internal temperature data, vehicle internal humidity data, external vehicle radar data or external vehicle lidar data.

Meanwhile, the camera data can include external vehicle camera data and vehicle internal camera data.

Meanwhile, the signal processing devices 170a1 and 170a2 can be configured to execute a plurality of virtual machines 820, 830, and 840 based on safety levels.

In the drawing, an example is illustrated in which the processor 175 in the signal processing device 170a is configured to execute the hypervisor 505, and is configured to execute first to third virtual machines 820 to 840 on the hypervisor 505 according to the Automotive Safety Integrity Level (ASIL).

The first virtual machine 820 can be a virtual machine corresponding to quality management (QM) which is the lowest risk level of the ASIL with no mandatory need.

The first virtual machine 820 can be configured to execute an operating system 822, a container runtime 824 on the operating system 822, and containers 827 and 829 on the container runtime 824.

The second virtual machine 820 can be a virtual machine corresponding to ASIL A or ASIL B with the combination of severity, exposure, and controllability values being 7 or 8.

The second virtual machine 820 can be configured to execute an operating system 832, a container runtime 834 on the operating system 832, and containers 837 and 839 on the container runtime 834.

The third virtual machine 840 can be a virtual machine corresponding to ASIL C or ASIL D with the combination of severity, exposure, and controllability values being 9 or 10.

Meanwhile, ASIL D can correspond to a grade that requires the highest level of safety.

The third virtual machine 840 can be configured to execute a safety operating system 842 and an application 845 on the operating system 842.

Meanwhile, the third virtual machine 840 can also execute the safety operating system 842, a container runtime 844 on the safety operating system 842, and a container 847 on the container runtime 844.

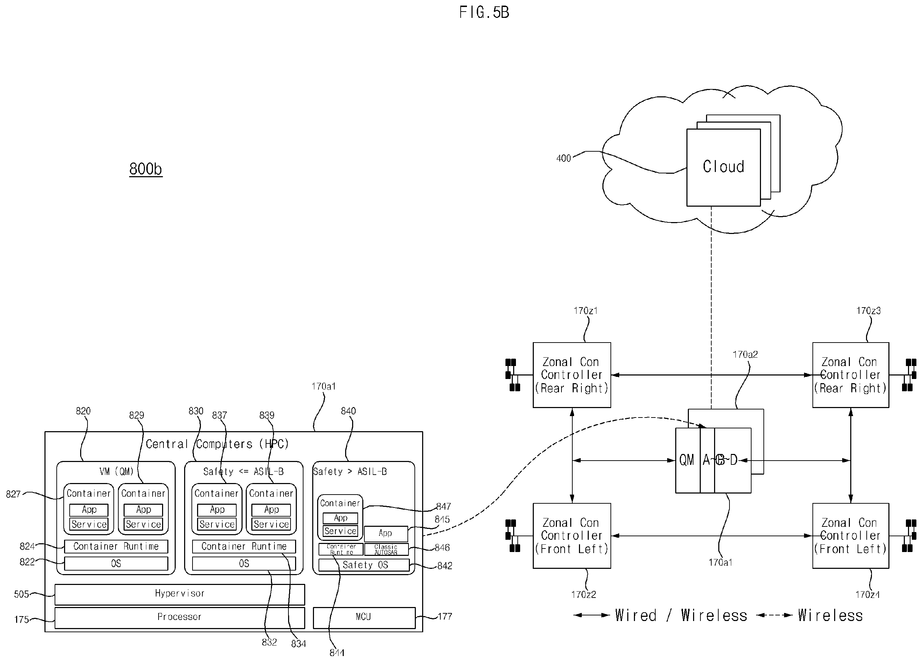

Meanwhile, unlike the drawing, the third virtual machine 840 can also be executed by a separate core, rather than by the processor 175, which will be described below with reference to FIG. 5B.

FIG. 5B is a diagram illustrating another example of a vehicle display apparatus according to an embodiment of the present disclosure.

Referring to FIG. 5B, a vehicle display apparatus 800b according to an embodiment of the present disclosure includes signal processing devices 170a1 and 170a2 and a plurality of zonal signal processing devices 170Z1 to 170Z4.

The vehicle display apparatus 800b of FIG. 5B is similar to the vehicle display apparatus 800a of FIG. 5A, with a difference being that the signal processing device 170a1 of FIG. 5B is partially different from the signal processing device 170a1 of FIG. 5A.

The following description will focus on the difference, in which the signal processing device 170a can include a processor 175 and a second processor 177.

The processor 175 in the signal processing device 170a1 is configured to execute the hypervisor 505, and is configured to execute the first and second virtual machines 820 and 830 on the hypervisor 505 according to the ASIL.

The first virtual machine 820 can be configured to execute the operating system 822, the container runtime 824 on the operating system 822, and the containers 827 and 829 on the container runtime 824.

The second virtual machine 820 can be configured to execute the operating system 832, the container runtime 834 on the operating system 832, and the containers 837 and 839 on the container runtime 834.

Meanwhile, the second processor 177 in the signal processing device 170a1 can be configured to execute the third virtual machine 840.

The third virtual machine 840 can be configured to execute the safety operating system 842, an AUTOSAR 845 on the operating system 842, and an application 845 on the AUTOSAR 845. That is, unlike FIG. 5A, the third virtual machine 840 can further execute the AUTOSAR 846 on the operating system 842.

Meanwhile, similarly to FIG. 5A, the third virtual machine 840 can also execute the safety operating system 842, the container runtime 844 on the safety operating system 842, and the container 847 on the container runtime 844.

Meanwhile, unlike the first and second virtual machines 820 and 830, the third virtual machine 840 that requires a high safety level is desirably executed by the second processor 177 that is a different core or a different processor.

Meanwhile, in the signal processing devices 170a1 and 170a2 of FIGS. 5A and 5B, if there is abnormality in the first signal processing device 170a, the second signal processing device 170a can operate which is provided for backup purposes.

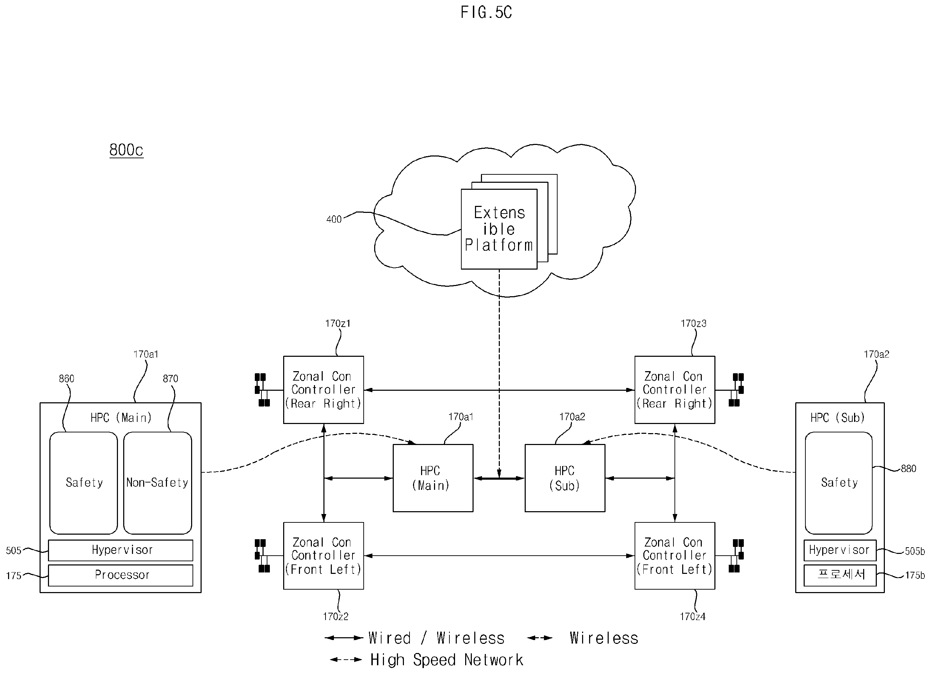

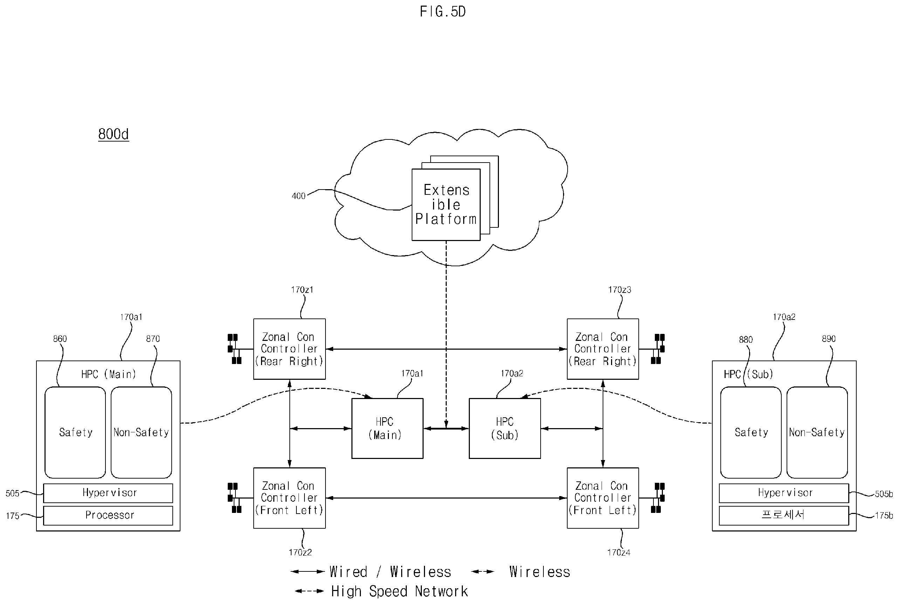

Unlike the example, the signal processing devices 170a1 and 170a2 can operate at the same time, among which the first signal processing device 170a can operate as a main device, and the second signal processing device 170a2 can operate as a sub device, which will be described below with reference to FIGS. 5C and 5D.

FIG. 5C is a diagram illustrating yet another example of a vehicle display apparatus according to an embodiment of the present disclosure.

Referring to FIG. 5C, a vehicle display apparatus 800c according to an embodiment of the present disclosure includes signal processing devices 170a1 and 170a2 and a plurality of zonal signal processing devices 170Z1 to 170Z4.

Meanwhile, two signal processing devices 170a1 and 170a2 are illustrated in the figure, which are provided for backup and the like, and one signal processing device is also possible.

Meanwhile, the signal processing devices 170a1 and 170a2 can be referred to as a High Performance Computing (HPC) signal processing devices.

The plurality of zonal signal processing devices 170Z1 to 170Z4 can be located in the respective zones Z1 to Z4 and can be configured to transmit sensor data to the signal processing devices 170a1 and 170a2.

The signal processing devices 170a1 and 170a2 can receive data by wire from the plurality of zonal signal processing devices 170Z1 to 170Z4 or a communication device 120.

In the drawing, an example is illustrated in which the signal processing devices 170a1 and 170a2 exchange data with the plurality of zonal signal processing devices 170Z1 to 170Z4 based on wired communication, and the signal processing devices 170a1 and 170a2 exchange data with the server 400 based on wireless communication, but the communication device 120 can exchange data with the server 400 based on wireless communication, and the signal processing devices 170a1 and 170a2 exchange data with the communication device 120 based on wired communication.

Meanwhile, the data received by the signal processing devices 170a1 and 170a2 can include camera data or sensor data.

Meanwhile, the processor 175 in the first signal processing device 170a1 of the signal processing devices 170a1 and 170a2 can be configured to execute the hypervisor 505, and can be configured to execute each of a safety virtual machine 860 and a non safety virtual machine 870 on the hypervisor 505.

Meanwhile, the processor 175b in the second signal processing device 170a2 of the signal processing devices 170a1 and 170a2 can be configured to execute the hypervisor 505b, and can be configured to execute only a safety virtual machine 880 on the hypervisor 505.

In the method, safety and non safety virtual machines can be processed separately by the first signal processing device 170a1 and the second signal processing device 170a2, thereby improving stability and processing speed.

Meanwhile, high-speed network communication can be performed between the first signal processing device 170a1 and the second signal processing device 170a2.

FIG. 5D is a diagram illustrating yet another example of a vehicle display apparatus according to an embodiment of the present disclosure.

Referring to FIG. 5D, a vehicle display apparatus 800d according to an embodiment of the present disclosure includes signal processing devices 170a1 and 170a2 and a plurality of zonal signal processing devices 170Z1 to 170Z4.

The vehicle display apparatus 800d of FIG. 5D is similar to the vehicle display apparatus 800c of FIG. 5C, with a difference being that the second signal processing device 170a2 of FIG. 5D is partially different from the second signal processing device 170a2 of FIG. 5C.

The processor 175b in the second signal processing device 170a2 of FIG. 5D can be configured to execute the hypervisor 505b, and can be configured to execute each of a safety virtual machine 880 and a non safety virtual machine 890 on the hypervisor 505.

That is, unlike FIG. 5C, there is a difference in that the processor 175b in the second signal processing device 170a2 further is configured to execute the non safety virtual machine 890.

In the method, safety and non safety virtual machines can be processed separately by the first signal processing device 170a1 and the second signal processing device 170a2, thereby improving stability and processing speed.

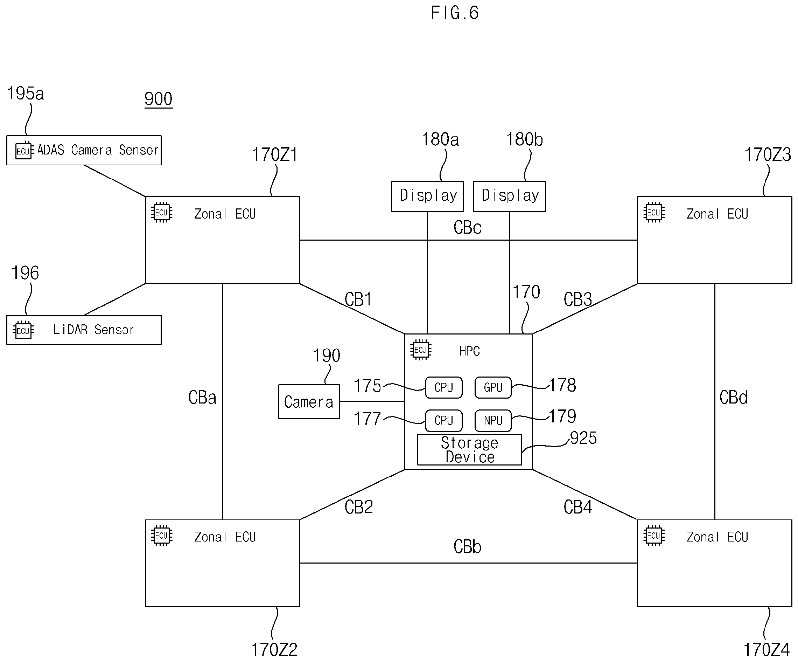

FIG. 6 is an exemplary block diagram of a vehicle display apparatus according to an embodiment of the present disclosure.

Referring to FIG. 6, a vehicle display apparatus 900 according to an embodiment of the present disclosure includes the signal processing device 170 and at least one display.

In the diagram, a cluster display 180a and an audio video navigation (AVN) display 180b are illustrated as the at least one display.

Meanwhile, the vehicle display apparatus 900 can further include the plurality of zonal signal processing devices 170Z1 to 170Z4.

In this case, the signal processing device 170 is a high-performance centralized signal processing and control device including a plurality of CPUs 175, GPUs 178, NPUs 179, etc., and can be referred to as a High Performance Computing (HPC) signal processing device or a central signal processing device.

The plurality of zonal signal processing devices 170Z1 to 170Z4 and the signal processing device 170 can be connected via wired cables CB1 to CB4.

Meanwhile, the plurality of zonal signal processing devices 170Z1 to 170Z4 can be connected via wired cables CBa to CBd.

In this case, the wired cables CBa to CBd can include can communication cable or Ethernet communication cable, or PCI Express cable.

Meanwhile, the signal processing device 170 according to an embodiment of the present disclosure can include at least one processor 175, 178, and 177, and a storage device 925 having a large capacity.

For example, the signal processing device 170 according to an embodiment of the present disclosure can include central processors 175 and 177, a graphic processor 178, and a neural processor 179.

Meanwhile, sensor data can be transmitted from at least one of the plurality of zonal signal processing devices 170Z1 to 170Z4 to the signal processing device 170. Particularly, the sensor data can be stored in the storage device 925 in the signal processing device 170.

In this case, the sensor data can include at least one of camera data, lidar data, radar data, vehicle direction data, vehicle position data (global positioning system (GPS) data), vehicle angle data, vehicle speed data, vehicle acceleration data, vehicle inclination data, vehicle forward/backward movement data, battery data, fuel data, tire data, vehicle lamp data, vehicle internal temperature data or vehicle internal humidity data.

In the drawing, an example is illustrated in which the camera data from the camera 195a and the lidar data from the lidar sensor 196 are input to a first zonal signal processing device 170Z1, and the camera data and the lidar data are transmitted to the signal processing device 170 via a second zonal signal processing device 170Z2 and a third zonal signal processing device 170Z3, and the like.

Meanwhile, as shown in the drawings, radar data from the radar sensor 197 and an actuator data from an actuator 193 can be inputted to the signal processing device 170 via the first zonal signal processing device 170Z1 and the like.

Meanwhile, data write speed or data read speed to write and read data to and from the storage device 925 is faster than a network speed when the sensor data is transmitted from at least one of the plurality of zonal signal processing devices 170Z1 to 170Z4 to the signal processing device 170, such that it is preferred to perform multi path routing so as to avoid bottlenecks in a network.

To this end, the signal processing device 170 according to an embodiment of the present disclosure can be configured to perform multi path routing based on Software Defined Network (SDN). Accordingly, stable network environment for data write and read operations can be ensured. Further, data can be transmitted to the storage device 925 by using a plurality of paths, such that data can be transmitted by dynamically changing a network configuration.

It is desirable that data communication between the plurality of zonal signal processing devices 170Z1 to 170Z4 and the signal processing device 170 in the vehicle display apparatus 900 according to an embodiment of the present disclosure is peripheral component interconnect express communication in order to provide high band and low delay communication.

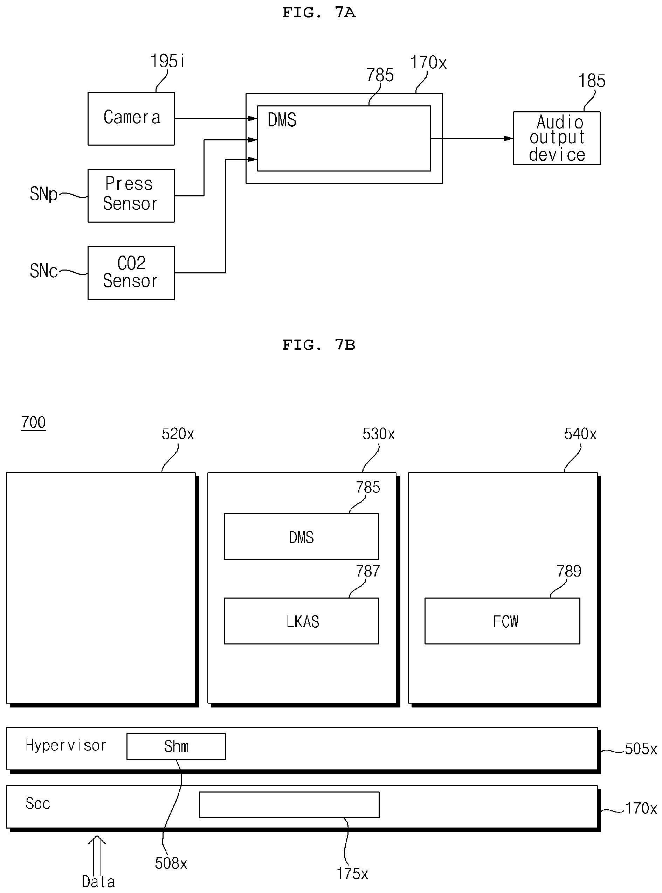

FIGS. 7A and 7B are diagrams referenced in the description of a signal processing device related to the present disclosure.

FIG. 7A illustrates an example in which an application based on camera data, etc. is executed in a signal processing device.

Referring to the drawings, a signal processing device 170x related to the present disclosure is configured to execute a driver monitoring systems (DMS) application 785 based on camera data from an vehicle internal camera 195i, sensor data from a pressure sensor SNp, and sensor data from a gas sensor SNc, and can control a warning sound to be output to an audio output device 185 based on the result data.

FIG. 7B is a diagram referenced in the description of the operation of FIG. 7A.

Referring to the drawings, the signal processing device 170x related to the present disclosure can include a processor 175x, and the processor 175x can be configured to execute a hypervisor 505.

Meanwhile, the processor 175x related to the present disclosure is configured to execute a plurality of virtual machines 520x, 530x, and 540x on the hypervisor 505, and a second virtual machine 530x, among the plurality of virtual machines 520x, 530x, and 540x, can be configured to execute a DMS application 785 based on the camera data from the vehicle internal camera 195i, the sensor data from the pressure sensor SNp, and the sensor data from the gas sensor SNc and execute a lane keep assist system (LKAS) application 787 based on vehicle external camera data.

Meanwhile, a third virtual machine 540x, among the plurality of virtual machines 520x, 530x, and 540x, can be configured to execute a forward collision warning (FCW) application 789 based on the vehicle external camera data.

Meanwhile, as shown in FIGS. 7A and 7B, in response to executing the driver monitoring system (DMS) application 785 and the LKAS application 787 within the second virtual machine 530x, there is a problem that a workload of the second virtual machine 530x is significant.

In particular, for executing the driver monitoring system (DMS) application 785, the camera data from the vehicle internal camera 195i, the sensor data from the pressure sensor SNp, and the sensor data from the gas sensor SNc has to be received and processed, so there is a problem that the workload of the second virtual machine 530x is significant.

Meanwhile, in response to executing the forward collision warning (FCW) application 789, the third virtual machine 540x is executed in a separate virtual machine from the lane keeping assist system 787, which is commonly based on the vehicle external camera data, so there is a problem that the workload is performed inefficiently.

In this disclosure, a method for sharing intermediate result data of an application, etc., in response to executing a similar application is proposed.

To this end, the signal processing device 170 according to an embodiment of the present disclosure divides an application into a plurality of microservices and is configured to execute another microservice based on the results of a microservice, etc., to efficiently distribute the workload.

For example, the signal processing device 170 according to an embodiment of the present disclosure can control a first microservice among the plurality of microservices to be executed in a first virtual machine and a second microservice to be executed in a second virtual machine, and the second microservice to be executed based on result data of the first virtual machine by sharing the result of the first microservice using the shared memory 508, etc. Accordingly, data processing can be performed efficiently.

Meanwhile, the signal processing device 170 according to an embodiment of the present disclosure can be configured to execute a plurality of virtual machines by distinguishing them according to a safety level.

Meanwhile, the signal processing device 170 according to an embodiment of the present disclosure can be configured to execute applications or microservices by dividing them according to the safety level.

Accordingly, in relation to vehicle driver assistance (ADAS) or autonomous driving, data processing can be stably performed according to the automotive safety integrity level (ASIL).

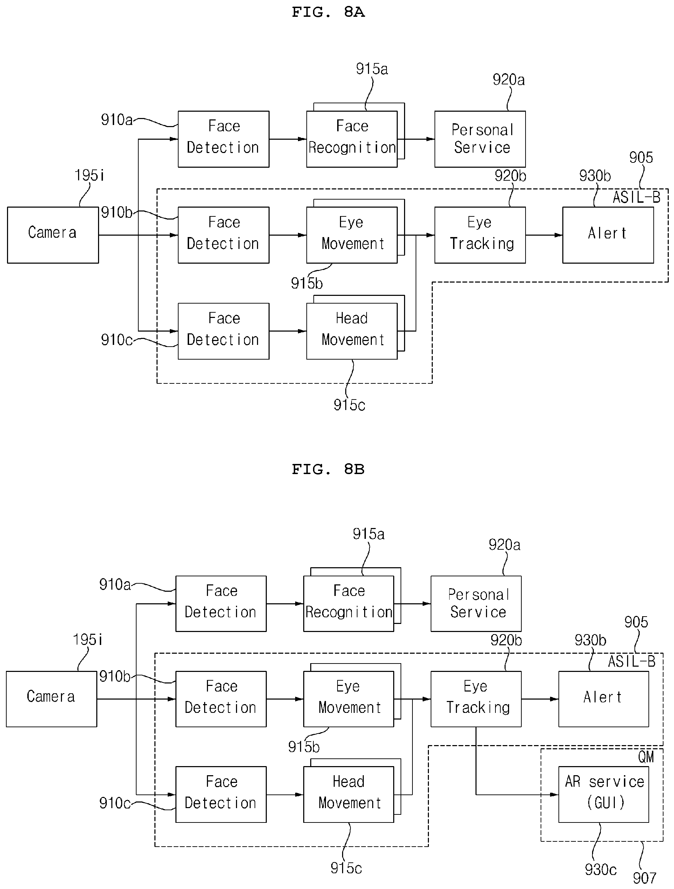

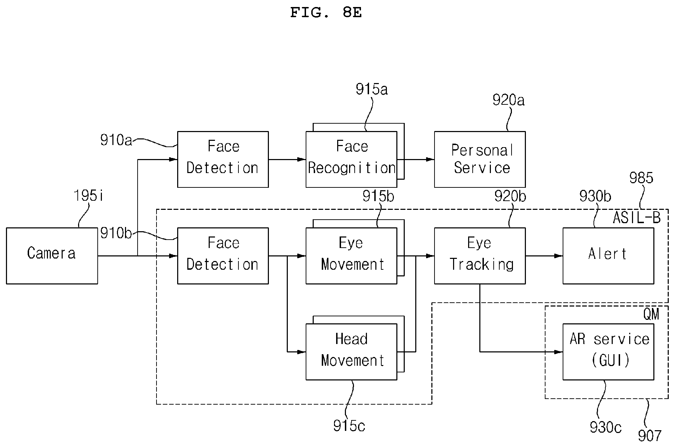

FIGS. 8A and 8E are diagrams illustrating various examples of execution of microservices according to an embodiment of the present disclosure.

FIG. 8A illustrates execution of a plurality of microservices corresponding to ASIL B based on camera data from the internal camera 195i.

Referring to the drawing, the signal processing device 170 according to an embodiment of the present disclosure can be configured to execute the driver monitoring system (DMS) application 905 corresponding to ASIL B.

For example, the signal processing device 170 according to an embodiment of the present disclosure can be configured to execute the driver monitoring system (DMS) application 905 separately for a plurality of microservices.

In the drawing, a plurality of microservices for the driver monitoring system (DMS) application 905 includes, for example, a face detection microservice 910b, an eye movement microservice 915b, an eye tracking microservice 920b, and an alert microservice 930b.

That is, the signal processing device 170 according to an embodiment of the present disclosure can be configured to execute a plurality of microservices, i.e., the face detection microservice 910b, the eye movement microservice 915b, the eye tracking microservice 920b, and the alert microservice 930b, for the driver monitoring system (DMS) application 905 corresponding to ASIL B.

Meanwhile, the face detection microservice 910b is executed based on the camera data from the internal camera 195i, and the result data of the face detection microservice 910b is transmitted to the eye movement microservice 915b.

Meanwhile, the eye movement microservice 915b is executed based on the result data of the face detection microservice 910b, and the result data of the eye movement microservice 915b is transmitted to the eye tracking microservice 920b.

Meanwhile, the eye tracking microservice 920b is executed based on the result data of the eye movement microservice 915b, and the result data of the eye tracking microservice 920b is transmitted to the alert microservice 930b.

Meanwhile, the alert microservice 930b can be executed based on the result data of the eye tracking microservice 920b, and the result data can be input to the audio output device 185, so that a warning sound can be output from the audio output device 185.

Meanwhile, the signal processing device 170 according to an embodiment of the present disclosure can further execute a second face detection microservice 910c and a head movement microservice 915c for the driver monitoring system (DMS) application 905 corresponding to ASIL B.

The second face detection microservice 910c is executed based on the camera data from the internal camera 195i, and the result data of the second face detection microservice 910c is transmitted to the head movement microservice 915c.

Meanwhile, the head movement microservice 915c is executed based on the result data of the second face detection microservice 910c, and the result data of the head movement microservice 915c is transmitted to the eye tracking microservice 920b.

Meanwhile, the eye tracking microservice 920b is executed based on the result data of the head movement microservice 915c and the result data of the eye movement microservice 915b, and the result data of the eye tracking microservice 920b can be transmitted to the alert microservice 930b.

Meanwhile, the signal processing device 170 according to an embodiment of the present disclosure can further execute a plurality of microservices that are not related to ASIL B, for example, corresponding to quality management (QM).

In the drawing, a third face detection microservice 910a, a face recognition microservice 915a, and a personal microservice 920a can be executed as a plurality of microservices that are not related to ASIL B, respectively.

FIG. 8B illustrates an example of executing a plurality of microservices corresponding to ASIL B and a microservice corresponding to QM based on the camera data from the internal camera 195i.

Referring to the drawing, the signal processing device 170 according to an embodiment of the present disclosure can be configured to execute the driver monitoring system (DMS) application 905 corresponding to ASIL B, similarly to FIG. 8A.

For example, the signal processing device 170 according to an embodiment of the present disclosure can be configured to execute each of the face detection microservice 910b, the eye movement microservice 915b, the eye tracking microservice 920b, and the alert microservice 930b as a plurality of microservices for the driver monitoring system (DMS) application 905 corresponding to ASIL B.

Meanwhile, the signal processing device 170 according to an embodiment of the present disclosure can further execute each of the second face detection microservice 910c and the head movement microservice 915c for the driver monitoring system (DMS) application 905 corresponding to ASIL B.

Meanwhile, the signal processing device 170 according to an embodiment of the present disclosure can be configured to execute the third face detection microservice 910a, the face recognition microservice 915a, and the personal microservice 920a as a plurality of microservices, which are not related to ASIL B.

Meanwhile, the signal processing device 170 according to an embodiment of the present disclosure can be configured to execute an augmented reality microservice 930c, which is an example of a graphics provision microservice, as a microservice corresponding to QM.

At this time, the signal processing device 170 according to an embodiment of the present disclosure can be configured to transmit the result data of the eye tracking microservice 920b among the microservices in the application 905 corresponding to ASIL B to the augmented reality microservice 930c corresponding to QM, which has a lower safety level.

Accordingly, the augmented reality microservice 930c corresponding to QM can be executed based on the result data of the eye tracking microservice 920b, and the result data of the augmented reality microservice 930c can be transmitted to the display 180 and displayed.

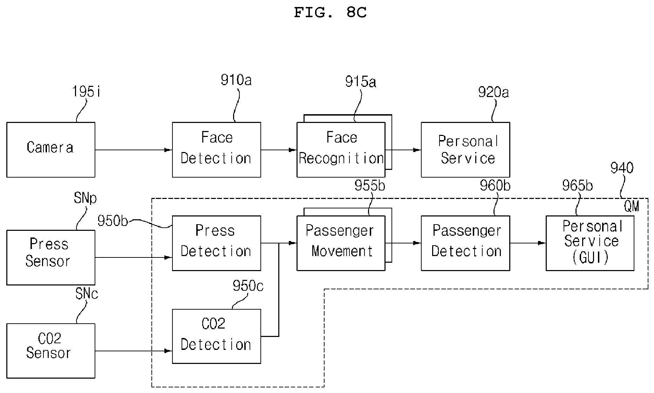

FIG. 8C illustrates execution of a plurality of microservices corresponding to QM.

Referring to the drawing, the signal processing device 170 according to an embodiment of the present disclosure can be configured to execute a passenger monitoring application 940 corresponding to QM.

For example, the signal processing device 170 according to an embodiment of the present disclosure can be configured to execute the passenger monitoring application 940 separately for a plurality of microservices.

In the drawing, as the plurality of microservices for the passenger monitoring application 940, a press detection microservice 950b, a passenger movement microservice 955b, a passenger detection microservice 960b, and a graphics provision microservice 965b.

That is, the signal processing device 170 according to an embodiment of the present disclosure can be configured to execute, as a plurality of microservices, the press detection microservice 950b, the passenger movement microservice 955b, the passenger detection microservice 960b, and the graphics provision microservice 965b, for the passenger monitoring application 940 corresponding to QM.

Meanwhile, the press detection microservice 950b is executed based on the sensor data from the pressure sensor SNp, and the result data of the press detection microservice 950b is transmitted to the passenger movement microservice 955b.

Meanwhile, the passenger movement microservice 955b is executed based on the result data of the press detection microservice 950b, and the result data of the passenger movement microservice 955b is transmitted to the passenger detection microservice 960b.

Meanwhile, the passenger detection microservice 960b is executed based on the result data of the passenger movement microservice 955b, and the result data of the passenger detection microservice 960b is transmitted to the graphics provision microservice 965b.

Meanwhile, the graphics provision microservice 965b is executed based on the result data of the passenger detection microservice 960b, and the result data of the graphics provision microservice 965b can be transmitted to the display 180 and displayed.

Meanwhile, the signal processing device 170 according to an embodiment of the present disclosure can further execute the gas detection (CO₂ detection) microservice 950c for the passenger monitoring application 940 corresponding to QM.

The gas detection (CO₂ detection) microservice 950c is executed based on the sensor data from the gas sensor SNc, and the result data of the gas detection (CO₂ detection) microservice 950c is transmitted to the passenger movement microservice 955b.

Meanwhile, the passenger movement microservice 955b is executed based on the result data of the gas detection (CO₂ detection) microservice 950c, and the result data of the passenger movement microservice 955b is transmitted to the passenger detection microservice 960b.

Meanwhile, the signal processing device 170 according to an embodiment of the present disclosure can further execute a plurality of microservices unrelated to the passenger monitoring application 940.

In the drawing, the signal processing device 170 is illustrated as executing the face detection microservice 910a, the face recognition microservice 915a, and the personal microservice 920a based on the camera data from the vehicle internal camera 195i, as a plurality of microservices unrelated to the passenger monitoring application 940.

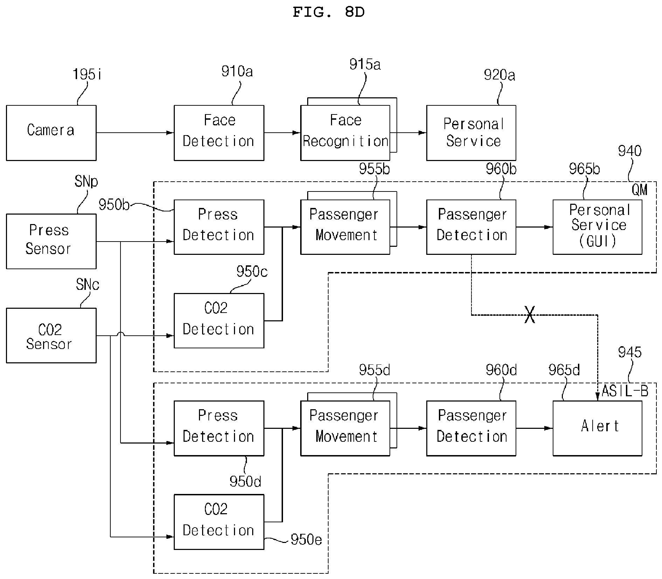

FIG. 8D illustrates execution of a plurality of microservices corresponding to ASIL B and a microservice corresponding to QM.

Referring to the drawing, the signal processing device 170 according to an embodiment of the present disclosure can be configured to execute a passenger monitoring application 940 corresponding to QM, similarly to FIG. 8C.

For example, the signal processing device 170 according to an embodiment of the present disclosure can be configured to execute, as a plurality of microservices, the press detection microservice 950b, the passenger movement microservice 955b, the passenger detection microservice 960b, and the graphics provision microservice 965b, for the passenger monitoring application 940 corresponding to QM.

Meanwhile, the signal processing device 170 according to an embodiment of the present disclosure can further execute the gas detection (CO₂ detection) microservice 950c for the passenger monitoring application 940 corresponding to QM.

Meanwhile, the signal processing device 170 according to an embodiment of the present disclosure can be configured to execute, as a plurality of microservices, the face detection microservice 910a, the face recognition microservice 915a, and the personal microservice 920a unrelated to the passenger monitoring application 940.

Meanwhile, the signal processing device 170 according to an embodiment of the present disclosure can further execute a passenger monitoring application 945 corresponding to ASIL B.

In the drawing, a plurality of microservices for the passenger monitoring application 945 corresponding to ASIL B are illustrated as including a press detection microservice 950d, a passenger movement microservice 955d, a passenger detection microservice 960d, and an alert microservice 965d.

Meanwhile, the press detection microservice 950d is executed based on the sensor data from the pressure sensor SNp, and the result data of the press detection microservice 950d is transmitted to the passenger movement microservice 955d.

Meanwhile, the passenger movement microservice 955d is executed based on the result data of the press detection microservice 950d, and the result data of the passenger movement microservice 955d is transmitted to the passenger detection microservice 960d.

Meanwhile, the passenger detection microservice 960d is executed based on the result data of the passenger movement microservice 955d, and the result data of the passenger detection microservice 960d is transmitted to the alert microservice 965d.

Meanwhile, the alert microservice 965d is executed based on the result data of the passenger detection microservice 960d, and the result data of the alert microservice 965d can be transmitted to the audio output device 185 and output.

Meanwhile, the signal processing device 170 according to an embodiment of the present disclosure can further execute a gas detection (CO₂ detection) microservice 950e for the passenger monitoring application 945 corresponding to ASIL B.

Meanwhile, the gas detection (CO₂ detection) microservice 950e is executed based on the sensor data from the gas sensor SNc, and the result data of the gas detection (CO₂ detection) microservice 950e can be transmitted to the passenger movement microservice 955d.

Meanwhile, the signal processing device 170 according to an embodiment of the present disclosure can be configured to not transmit the result data of the passenger detection microservice 960b among the microservices in the passenger monitoring application 940 corresponding to QM to the alert microservice 965d in the passenger monitoring application 945 corresponding to ASIL B.

That is, since the safety level of the passenger detection microservice 960b in the passenger monitoring application 940 corresponding to QM is lower than the safety level of the alert microservice 965d in the passenger monitoring application 945 corresponding to ASIL B, the signal processing device 170 according to an embodiment of the present disclosure cannot transmit the result data of the passenger detection microservice 960b to the alert microservice 965d in the passenger monitoring application 945 corresponding to ASIL B. Accordingly, each safety level can be maintained.

FIG. 8E illustrates another example of execution of a plurality of microservices corresponding to ASIL B and a microservice corresponding to QM based on camera data from the internal camera 195i.

Referring to the drawing, the signal processing device 170 according to an embodiment of the present disclosure can be configured to execute a driver monitoring system (DMS) application 985 corresponding to ASIL B, similarly to FIG. 8B.

The driver monitoring system (DMS) application 985 is similar to the driver monitoring system (DMS) application 905 of FIG. 8B but has a difference in that the second face detection microservice 910c is not performed.

For example, the signal processing device 170 according to an embodiment of the present disclosure can be configured to execute, as a plurality of microservices, the face detection microservice 910b, the eye movement microservice 915b, the head movement microservice 915c, the eye tracking microservice 920b, and the alert microservice 930b, for the driver monitoring system (DMS) application 985 corresponding to ASIL B.

Meanwhile, the head movement microservice 915c is executed based on the result data of the face detection microservice 910b, and the result data of the head movement microservice 915c is transmitted to the eye tracking microservice 920b.

Meanwhile, the signal processing device 170 according to an embodiment of the present disclosure can be configured to execute the third face detection microservice 910a, the face recognition microservice 915a, and the personal microservice 920a as a plurality of microservices that are not related to ASIL B.

Meanwhile, the signal processing device 170 according to an embodiment of the present disclosure can be configured to execute an augmented reality microservice 930c as a microservice corresponding to QM.

At this time, the signal processing device 170 according to an embodiment of the present disclosure can be configured to transmit the result data of the eye tracking microservice 920b among the microservices in the application 985 corresponding to ASIL B to the augmented reality microservice 930c corresponding to QM, which has a lower safety level.

Accordingly, the augmented reality microservice 930c corresponding to QM is executed based on the result data of the eye tracking microservice 920b, and the result data of the augmented reality microservice 930c can be transmitted to the display 180 and displayed.

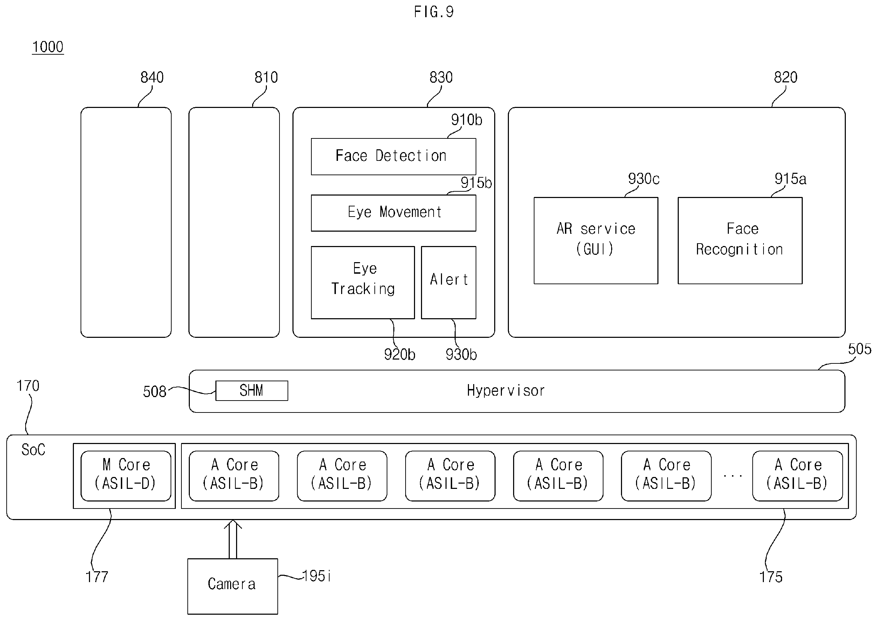

FIG. 9 is an example of an internal block diagram of the signal processing device according to an embodiment of the present disclosure.

Referring to the drawing, the signal processing device 170 in a system 1000 according to an embodiment of the present disclosure has a processor 175 that is configured to execute the hypervisor 505.

Meanwhile, the processor 175 can correspond to the central processor (CPU) of FIG. 6.

Meanwhile, the processor 175 can have a plurality of processor cores.

In the drawing, the plurality of processor cores are illustrated as operating based on the safety level of ASIL B, but various modifications can be made.

For example, some of the plurality of processor cores can operate based on the safety level of ASIL B, and others can operate based on the safety level of QM.

Meanwhile, the signal processing device 170 according to an embodiment of the present disclosure can further include a second processor 177 including an M core or a micom unit (MCU) for executing applications of the highest safety level, ASIL D.

Meanwhile, the processor 175 is configured to execute a plurality of virtual machines 810 to 830 on the hypervisor 505.

Meanwhile, among the plurality of virtual machines 810 to 830, the first virtual machine 830 is configured to execute a plurality of microservices 910b, 915b, 920b, and 930b corresponding to a first safety level, such as ASIL B.

Meanwhile, among the plurality of virtual machines 810 to 830, the first virtual machine 830 transmits the result data of the first microservice 920b among the plurality of microservices to the second virtual machine 820 among the plurality of virtual machines 810 to 830 corresponding to a second safety level lower than the first safety level or to a virtual machine within the second signal processing device 170Z. Accordingly, it is possible to perform mixed operation of microservices. Furthermore, it is possible to perform data processing efficiently using microservices.

Meanwhile, the first virtual machine 830 can be configured to execute a plurality of microservices separately for executing a first application corresponding to the first safety level.

That is, among the plurality of virtual machines 810 to 830, the first virtual machine 830 can separately execute the face detection microservice 910b, the eye movement microservice 915b, the eye tracking microservice 920b, and the alert microservice 930b as a plurality of microservices for the driver monitoring system (DMS) application 905 corresponding to the first safety level, such as ASIL B.

Meanwhile, the second virtual machine 820 can be configured to execute a second application corresponding to the second safety level, and the second application can be executed based on the result data of the first microservice 920b.

For example, among the plurality of virtual machines 810 to 830, the second virtual machine 820 can be configured to execute the augmented reality microservice 930c as a microservice corresponding to the second safety level, QM, as shown in FIG. 8B.

Meanwhile, among the plurality of virtual machines 810 to 830, the second virtual machine 820 can be configured to execute the face recognition microservice 915a as a microservice corresponding to the second safety level, QM, as shown in FIG. 8B.

Meanwhile, among the plurality of virtual machines 810 to 830, the second virtual machine 820 can be configured to execute the augmented reality microservice 930c as a microservice corresponding to QM.

Meanwhile, the first virtual machine 830 can be configured to transmit the result data of the eye tracking microservice 920b among the microservices in the application 905 corresponding to ASIL B to the augmented reality microservice 930c corresponding to QM, which has a lower safety level.

That is, the first virtual machine 830 can be configured to transmit the result data of the eye tracking microservice 920b among the microservices in the application 905 corresponding to ASIL B to the augmented reality microservice 930c in the second virtual machine 820 with a lower safety level, as shown in FIG. 8B.

Specifically, the first virtual machine 830 can be configured to execute each of the face detection microservice 910b, the eye movement microservice 915b, the eye tracking microservice 920b, and the alert microservice 930b based on the received camera data and transmit the result data of the eye tracking microservice 920b to the second virtual machine 820 corresponding to the second safety level.

Meanwhile, the second virtual machine 820 can be configured to execute the augmented reality microservice 930c based on the result data of the eye tracking microservice 920b and control the display 180 to display the result data of the augmented reality microservice 930c as shown in FIG. 8B.

In this manner, the eye tracking microservice 920b does not need to be separately executed within the second virtual machine 820, and therefore it is possible to efficiently perform data processing.

Meanwhile, the first virtual machine 830 can be configured to transmit the result data of the first microservice 920b to at least one virtual machine corresponding to the second safety level, which is lower than the first safety level, using the shared memory 508.

Meanwhile, the first virtual machine 830 can be configured to transmit the result data of the first microservice 920b to the second virtual machine 820 corresponding to the second safety level lower than the first safety level by using the shared memory 508.

Meanwhile, the first virtual machine 830 can be configured to transmit the result data of the eye tracking microservice 920b to the augmented reality microservice 930c within the second virtual machine 820 by using the shared memory within the hypervisor 505.

In this manner, when the shared memory 508 is used when transmitting the result data, 1:n result data can be transmitted.

Meanwhile, the second virtual machine 820 can be configured to not transmit the result data of the microservice being executed or the result data of the application to the first virtual machine 830.

That is, the second virtual machine 820 can be configured to not transmit data to the first virtual machine 830 with a higher safety level.

For example, the result data of the face recognition microservice 915a in the second virtual machine 820 can not be transmitted to the first virtual machine 830. Accordingly, the safety level of each virtual machine can be maintained.

Meanwhile, the first virtual machine 830 among the plurality of virtual machines 810 to 830 can be configured to not transmit the result data of the first microservice 920b among the plurality of microservices to the virtual machine with a third safety level higher than the first safety level.

For example, if the third virtual machine 810 among the plurality of virtual machines 810 to 830 has the third safety level higher than the first safety level as ASIL D, the first virtual machine 830 can be configured to not transmit the result data of the first microservice 920b among the plurality of microservices to the third virtual machine 810 of the third safety level higher than the first safety level or the fourth virtual machine 840. Accordingly, the safety level of each virtual machine can be maintained.

Meanwhile, some cores of the processor 175 can be configured to execute the first virtual machine 830, and other cores of the processor 175 can be configured to execute the second virtual machine 820.

In the drawing, it is illustrated that some cores of the processor 175 execute the first virtual machine 830 corresponding to the first safety level, ASIL B, and other cores of the processor 175 execute the second virtual machine 820 corresponding to the second safety level, QM. Accordingly, it is possible to efficiently perform data processing using microservices.

Meanwhile, the second processor 177 can be configured to execute an application or virtual machine of the highest safety level, ASIL D.

Meanwhile, the safety level of the application or virtual machine executed on the second processor 177 can be higher than the first safety level. Accordingly, it is possible to enhance the stability of a perception service.

Meanwhile, the second virtual machine 820 can be configured to execute the face recognition microservice 915a based on the received camera data and execute an additional microservice, the personal microservice 920a, based on the result data of the face recognition microservice, as shown in FIG. 8D.

Meanwhile, the second virtual machine 820 can be configured to execute each of the press detection microservice 950b, the passenger movement microservice 955b, the passenger detection microservice 960b, and the graphics provision microservice 965b for the passenger monitoring application 940 corresponding to QM based on the received sensor data or camera data and can be configured to not transmit the service result data of the passenger detection microservice 960b to the first virtual machine 830 , as shown in FIG. 8D.

Meanwhile, if the service result data of the passenger detection microservice 960b is not received from the second virtual machine 820, the first virtual machine 830 can be configured to execute each of the press detection microservice 950d, the passenger movement microservice 955d, the passenger detection microservice 960d, and the alert microservice 965d for the passenger monitoring application 945 corresponding to ASIL B, based on the received sensor data or camera data, as shown in FIG. 8D. Accordingly, it is possible to efficiently perform data processing using microservices.

Meanwhile, the first virtual machine 830 in the signal processing device 170 according to another embodiment of the present disclosure is configured to execute the first application and transmit the result data or intermediate result data of the first application to the second virtual machine 820 or to a virtual machine in the second signal processing device 170Z corresponding to the second safety level. Accordingly, it is possible to efficiently perform data processing using microservices.

Meanwhile, the first virtual machine 830 can be configured to execute the first application including a plurality of microservices and transmit result data of at least some of the plurality of microservices to the second virtual machine 820 or the second signal processing device 170Z.

FIG. 10 is an example of an internal block diagram of a signal processing device according to another embodiment of the present disclosure.

Referring to the drawing, the signal processing device 170 in a system 1000b according to another embodiment of the present disclosure can be configured to transmit data to the second signal processing device 170 or receive data from the second signal processing device 170.

Referring to a difference from FIG. 9, the second signal processing device 170z can be a zonal signal processing device.

The second signal processing device 170z includes a processor 175z that is configured to execute a hypervisor 505z.

Meanwhile, the processor 175z in the second signal processing device 170z can have a plurality of processor cores.

Meanwhile, the second signal processing device 170z can further include a separate processor 177z including an M core or an MCU (micom unit) for executing applications of the highest safety level, ASIL D.

Meanwhile, the processor 175z can be configured to execute at least one virtual machine 830z on the hypervisor 505.

Meanwhile, the separate processor 177z can be configured to execute a virtual machine 840z corresponding to the highest safety level, ASIL D, on the M core.

Meanwhile, the camera data from the internal camera 195i can be transmitted to the signal processing device 170 or the second signal processing device 170z.

In the drawing, it is illustrated that the virtual machine 830z in the processor 175z is configured to execute a video stream application 993 based on the camera data.

Meanwhile, the processor 175 in the signal processing device 170 can receive sensor data or camera data from the second signal processing device 170Z.

Meanwhile, the first virtual machine 830 in the signal processing device 170 can be configured to execute a plurality of microservices corresponding to the first safety level based on the sensor data or camera data, and, as shown in FIG. 8B, can be configured to transmit result data of a first microservice 920b among the plurality of microservices to the second virtual machine 820 corresponding to the second safety level lower than the first safety level.

Meanwhile, the first virtual machine 830 in the signal processing device 170 can be configured to execute a plurality of microservices corresponding to the first safety level based on the sensor data or camera data and transmit the result data of the first microservice 920b among the plurality of microservices to a virtual machine in the second signal processing device 170z corresponding to the second safety level lower than the first safety level.

For example, the first virtual machine 830 in the signal processing device 170 can be configured to transmit the result data of the eye tracking microservice 920b to the virtual machine 830z in the second signal processing device 170z corresponding to the same safety level, ASIL B.

Accordingly, the virtual machine 830z in the second signal processing device 170Z does not need to separately execute the eye tracking microservice 920b, and therefore it is possible to efficiently perform data processing.

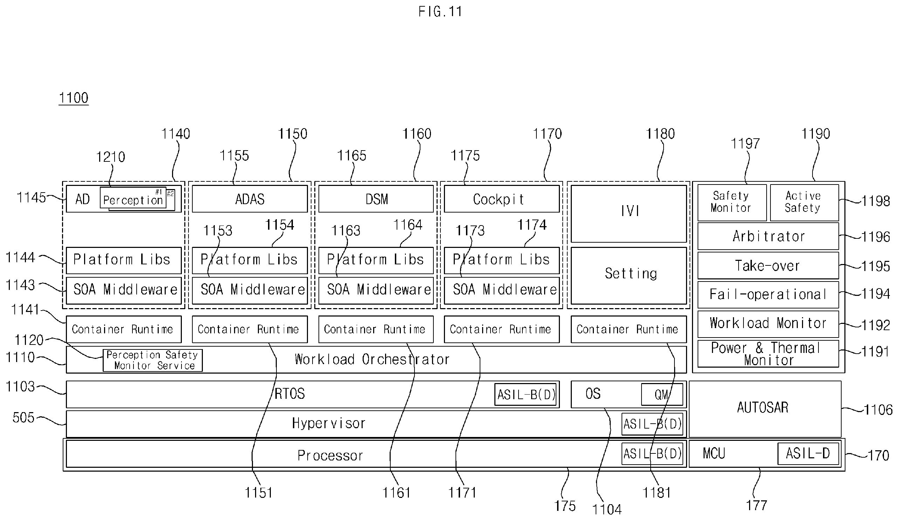

FIG. 11 is a diagram illustrating an operation of a vehicle signal processing device according to an embodiment of the present disclosure.

Referring to the drawing, the signal processing device 170 according to an embodiment of the present disclosure includes a processor 175 configured to execute a hypervisor 505.

Meanwhile, the processor 175 according to an embodiment of the present disclosure executes, on the hypervisor 505, a perception service 1210 which performs perception based on sensor data and a safety monitor service 1120 which monitors the perception service 1210, and performs a recovery mode based on a redundant perception service 1210b while executing the perception service 1210.

Accordingly, it is possible to improve the stability of the sensor data-based perception service. Furthermore, the usability of the sensor data-based perception service 1210 can be enhanced.

For example, the processor 175 can be configured to execute an operating system 1103, such as an RTOS, on the hypervisor 505, and execute a workload orchestrator 1110 on the operating system 1103.

Meanwhile, the processor 175 can be configured to execute at least one application on the orchestrator 1110.

For example, the processor 175 can be configured to execute, on the orchestrator 1110, an autonomous driving service 1140, a vehicle driving assistance service 1150, a driver monitoring service 1160, or a cockpit service 1170.

Meanwhile, the processor 175 can be configured to execute, on the hypervisor 505, a second operating system 1104 with a lower safety level than the operating system 1103 corresponding to ASIL B or ASIL D, execute the workload orchestrator 1110 on the second operating system 1104, execute a container runtime 1181 on the orchestrator 1110, and execute an IVI service 1180 for IVI display on the container runtime 1181.

Meanwhile, for the execution of each service 1140~1170, the processor 175 can be configured to execute respective container runtimes 1141~1171, and execute Service-Oriented Architecture (SOA) middleware 1143~1173, platform libraries 1144~1174, and the like on each container runtime 1141~1171.

Meanwhile, the processor 175 can be configured to execute, on each platform library 1144~1174, an autonomous driving application 1145, a vehicle driving assistance application 1155, a driver monitoring application 1165, or a cockpit application 1175.

Meanwhile, the processor 175 can be configured to execute a configuration service 1184, IVI application, etc. on the container runtime 1181.

Meanwhile, the processor 175 can be configured to execute a safety monitor service 1120 within the orchestrator 1110.

In this instance, the safety monitor service 1120 can be a perception safety monitor service.

Meanwhile, the safety monitor service 1120 can monitor the perception service 1210 executed in at least one application 1145~1185.

For example, the safety monitor service 1120 can control the redundant perception service 1210b to operate during operation of the perception service 1210, and, upon occurrence of a failure in the perception service 1210, can transmit a recovery command to the perception service 1210 and an activity command to the redundant perception service 1210b. Accordingly, it is possible to improve the stability of the sensor data-based perception service.

Meanwhile, the safety monitor service 1120 can be configured to switch between the perception service 1210 and the redundant perception service 1210b, based on monitoring data or analysis data from the perception service 1210 or the redundant perception service 1210b. Accordingly, it is possible to improve the stability of the sensor data-based perception service.

Meanwhile, the safety monitor service 1120 can be configured to change criteria for switching between the perception service 1210 and the redundant perception service 1210b, based on monitoring data or analysis data from the perception service 1210 or the redundant perception service 1210b. Accordingly, it is possible to improve the stability of the sensor data-based perception service.

Meanwhile, the processor 175 can be configured to perform a perception service 1210 for autonomous driving 1140, vehicle driving assistance 1150, or driver monitoring 1160, based on sensor data. Accordingly, the usability of the perception service 1210 can be enhanced.

Meanwhile, the processor 175 can be configured to perform a perception service 1210 for active steering, lane keeping, emergency braking, automatic lane change, or traffic jam pilot, based on sensor data. Accordingly, the usability of the perception service 1210 can be enhanced.

Meanwhile, the perception service 1210 can correspond to one of a plurality of microservices for application execution.

For example, the perception service 1210 can correspond to a microservice for performing object detection, object tracking, lane detection, or lane keeping.

That is, the processor 175 can be configured to perform object detection or object tracking based on the perception service 1210. Accordingly, the usability of the perception service can be enhanced.

Meanwhile, while executing each application 1145~1185, the processor 175 can be configured to execute a plurality of microservices as described above. Accordingly, applications can be executed efficiently.

For example, while executing the autonomous driving application 1145, the processor 175 can be configured to execute a microservice for performing object detection, object tracking, lane detection, or lane keeping, based on sensor data received from the sensor device SN.

As another example, while executing the vehicle driving assistance application 1155, the processor 175 can be configured to execute a microservice for object detection, object tracking, or lane detection, based on sensor data received from the sensor device SN.

As another example, while executing the driver monitoring application 1165, the processor 175 can be configured to execute a microservice for object detection or object tracking, based on sensor data received from the sensor device SN.

Meanwhile, the signal processing device 170 of FIG. 11 can further include a second processor 177 which includes an MCU (microcontroller unit), in addition to the processor 175.

In this case, the safety level of the second processor 177 can be higher than or equal to that of the processor 175.

For example, the safety level of the second processor 177 can be ASIL D, while the safety level of the processor 175 can be ASIL B or ASIL D.

Meanwhile, the second processor 177 can be configured to execute AUTOSAR 1106, and on AUTOSAR 1106, it can be configured to execute a power and thermal monitor 1191, a workload monitor 1192, a fail-operational service 1194, a take-over service 1195, an arbitrator service 1196, a safety monitor 1197, or active safety 1198.

Meanwhile, through the fail-operational service 1194, the second processor 177 can be configured to execute a degradation mode or emergency mode.

Meanwhile, unlike the drawings, the processor 175 can be configured to execute the fail-operational service 1194, or the processor 175 can be configured to execute the degradation mode or emergency mode.

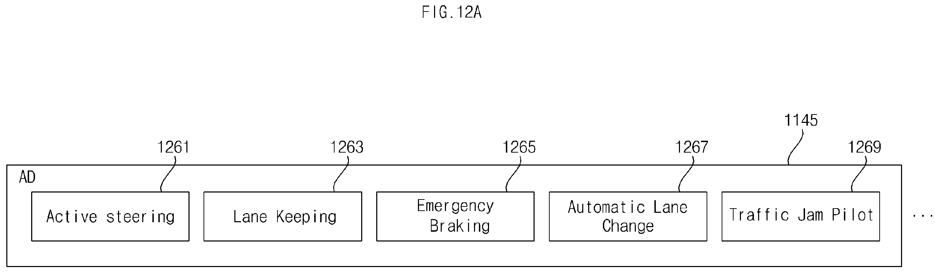

FIGS. 12A to 19B are drawings referenced in the description of the operation of FIG. 11.

FIG. 12A is a drawing illustrating various services within the autonomous driving application of FIG. 11.

Referring to the drawings, while executing the autonomous driving application 1145, the processor 175 within the signal processing device 170 can be configured to execute services such as active steering 1261, lane keeping 1263, emergency braking 1265, automatic lane change 1267, or traffic jam pilot 1269, based on sensor data.

For example, the active steering 1261, lane keeping 1263, emergency braking 1265, automatic lane change 1267, or traffic jam pilot 1269 service can correspond to a microservice for executing the autonomous driving application 1145.

Meanwhile, the processor 175 can be configured to perform a perception service 1210 for active steering 1261, lane keeping 1263, emergency braking 1265, automatic lane change 1267, or traffic jam pilot 1269, based on sensor data. Accordingly, the usability of the perception service 1210 can be enhanced.

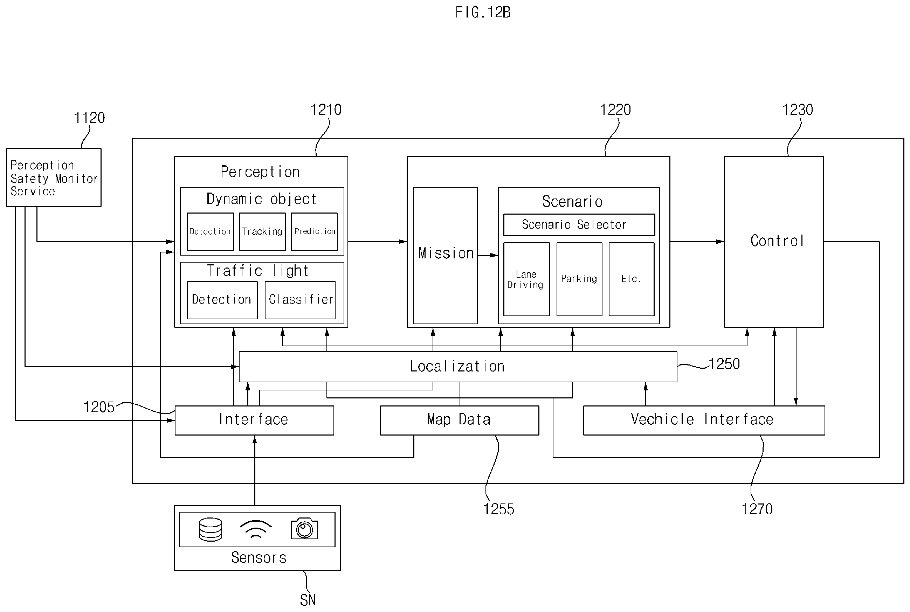

FIG. 12B is a drawing referenced in the description of the operation of the safety monitor service of FIG. 11.

Referring to the drawing, an interface 1205 within the signal processing device 170 can receive sensor data from various sensor devices SN.

Meanwhile, the processor 175 can be configured to perform a perception service 1210 for the autonomous driving application 1145, the vehicle driving assistance application 1155, or the driver monitoring application 1165, based on map data stored in the memory 925 or sensor data from the interface 1205.

Meanwhile, the processor 175 can be configured to execute localization 1250 based on a vehicle driving condition, weather information, and sensor data, execute the perception service 1210 based on the localization 1250, execute planning 1220 based on the perception service 1210, and output a vehicle control signal based on the planning 1220.

For example, the safety monitor service 1120 can transmit a vehicle driving condition, such as tunnel driving, or weather information, such as light rain, for processing the localization 1250.

Meanwhile, the processor 175 can be configured to perform the localization 1250 based on a vehicle driving condition, weather information, and sensor data.

Meanwhile, the safety monitor service 1120 can transmit information such as confidence level, weather condition, or sensor corruption to the interface 1205.

Meanwhile, the safety monitor service 1120 can transmit workload information, such as delay, to the perception service 1210.

Meanwhile, the processor 175 can be configured to execute the perception service 1210 based on the results of the localization 1250 or workload information such as delay.

For example, the processor 175 can be configured to perform dynamic object processing such as detection, tracking, and prediction, as well as traffic light processing such as detection and classification, in order to execute the perception service 1210.

Meanwhile, the processor 175 can be configured to execute the planning 1220 based on the results of the perception service 1210 or the results of the localization.

Specifically, the processor 175 can be configured to perform mission processing and scenario processing, in order to execute the planning 1220.

For example, at the time of scenario processing, the processor 175 can be configured to perform scenario selection, lane driving, or parking.

Meanwhile, the processor 175 can output a vehicle control signal for vehicle control 1230, based on the results of the planning 1220.

In this instance, the vehicle control signal can be delivered to each device within the vehicle through a vehicle interface 1270.

For example, the vehicle control signal can include a steering adjustment signal, a lane keeping signal, an emergency braking signal, or a lane change signal.

Accordingly, the processor 175 can be configured to perform vehicle control suitable for a vehicle driving condition or weather information based on sensor data.

Meanwhile, the processor 175 can be configured to change a mode for the planning 1220 or control 1230 for vehicle operation based on the confidence level.

For example, the processor 175 can be configured to perform control such that a normal mode, degradation mode, emergency mode, or manual driving mode is executed, based on the confidence level. Accordingly, it is possible to improve the stability of the sensor data-based perception service based on the confidence level.

Meanwhile, while executing the perception service 1210, the processor 175 can be configured to perform control such that a recovery mode is enabled by using a redundant perception service, as described above. Accordingly, the stability of the perception service can be enhanced, and, as a result, stable vehicle control can be achieved.

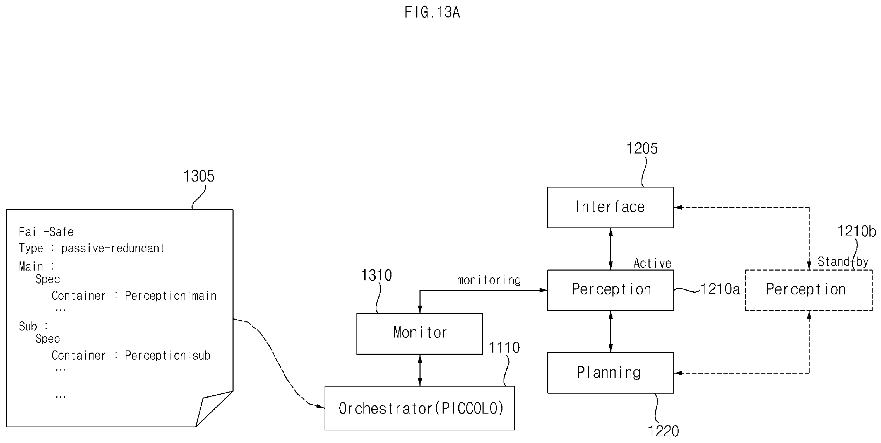

FIG. 13A is a diagram referenced in the description of the operation of the orchestrator.

Referring to the drawing, the orchestrator 1110 can receive fail-safe data 1305.

For example, the fail-safe data 1305 can include both a main perception service and a redundant perception service, for the sake of perception service.

The orchestrator 1110 can monitor 1310 the main perception service 1210a, based on the reception of the fail-safe data 1305.

Meanwhile, the processor 175 can be configured to perform control such that the main perception service 1210a remains active while the redundant perception service 1210b is in a standby state, based on the fail-safe data 1305.

That is, the safety monitor service 1120 can be configured to perform control such that the operation of the redundant perception service 1210b is paused during operation of the perception service 1210.

Meanwhile, the main perception service 1210a within the processor 175 can be configured to perform perception based on sensor data from the interface 1205 and transmit recognition results to the planning 1220.

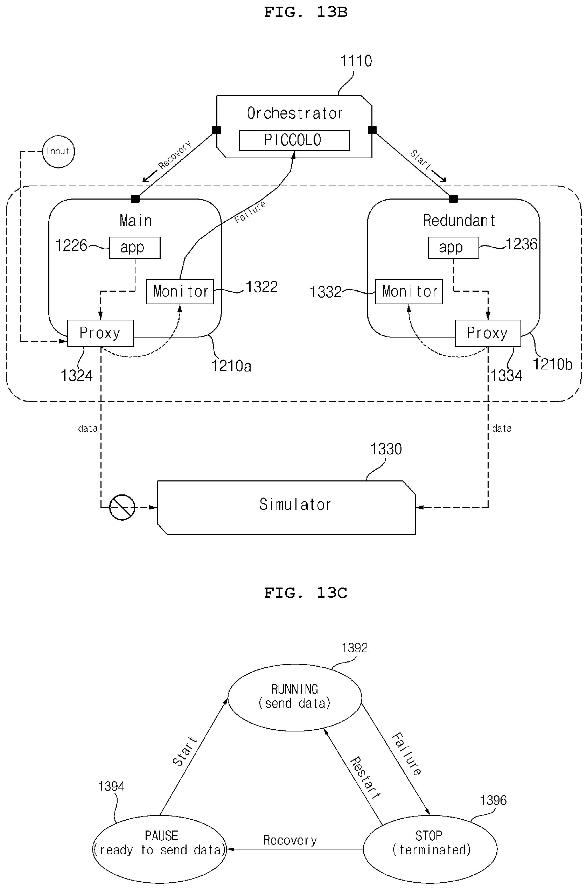

FIG. 13B illustrates an example in which both a main service and a redundant service are active.

Referring to the drawing, the processor 175 can be configured to execute the orchestrator 1110, the main service, and the redundant service.

For example, the main service can be the main perception service 1210a, and the redundant service can be the redundant perception service 1210b.

That is, the processor 175 can be configured to execute either the main perception service 1210a or the redundant perception service 1210b, based on sensor data.

Meanwhile, the processor 175 can be configured to perform control such that the main perception service 1210a and the redundant perception service 1210b are executed in separate containers.

In the drawing, it is illustrated that a first application 1226 is executed within the main perception service 1210a and a second application 1236 is executed within the redundant perception service 1210b, although various modifications are possible.

For example, the processor 175 can be configured to execute the main perception service 1210a and the redundant perception service 1210b within the same container or within the same application.

Meanwhile, a proxy router 1324 within the main perception service 1210a or a proxy router 1334 within the redundant perception service 1210b can transmit data to a simulator 1330.

Meanwhile, a monitor 1322 within the main perception service 1210a or the monitor 1332 within the redundant perception service 1210b can monitor the proxy router 1324 or the proxy router 1334, respectively.

For example, the monitor 1322 within the main perception service 1210a or the monitor 1332 within the redundant perception service 1210b can transmit a failure notification to the orchestrator 1110 when a data error occurs.

Meanwhile, the monitor 1322 within the main perception service 1210a or the monitor 1332 within the redundant perception service 1210b can detect faults or perform error detection, through periodic monitoring.

Meanwhile, the orchestrator 1110 can be configured to update a monitoring module 1322 and 1332 or management modules within the perception service 1210 or the redundant perception service 1210b. Accordingly, the stability of the sensor data-based perception service can be improved.

FIG. 13C is a diagram referenced in the description of the operation of the main perception service or redundant perception service of FIG. 13B.

Referring to the drawing, the processor 175 can control the main perception service 1210a and the redundant perception service 1210b to attempt data transmission while they are in a running state 1392 by default.

Meanwhile, the processor 175 can be configured to perform control such that the data transmitted by the redundant perception service 1210b is blocked.

Meanwhile, when data transmission is in a stop state 1396 due to a failure in the main perception service 1210a, the processor 175 can be configured to perform control such that a restart command is transmitted to the main perception service 1210a through the orchestrator 1110.

Meanwhile, when both the main perception service 1210a and the redundant perception service 1210b are active, the processor 175 can be configured to perform control such that the pause state 1394 is deactivated.

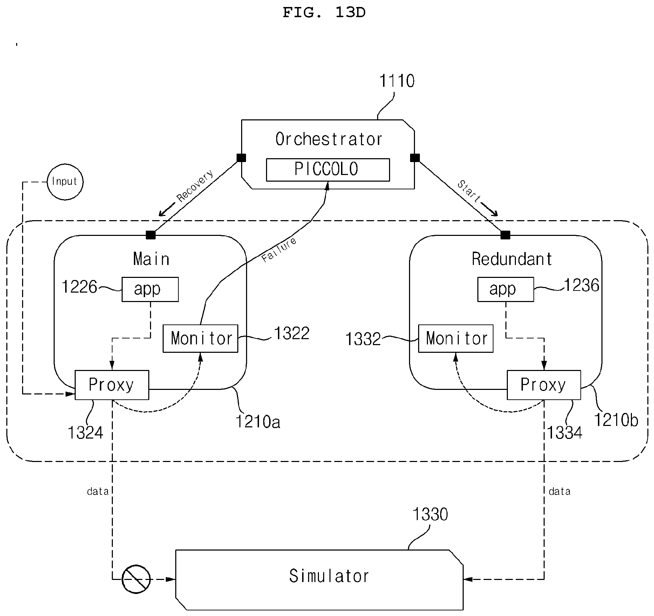

FIG. 13D illustrates an example in which the main service is active and the redundant service is passive.

Referring to the drawing, the processor 175 can be configured to execute the orchestrator 1110, the main perception service 1210a, and the redundant perception service 1210b, as shown in FIG. 13B.

Meanwhile, based on sensor data, the processor 175 can control the main perception service 1210a to go into the running state 1392 and control the redundant perception service 1210b to go into the pause state 1394.

Accordingly, the main perception service 1210a performs data transmission, while the redundant perception service 1210b can pause data transmission.

Meanwhile, when data transmission is in the stop state 1396 due to a failure in the main perception service 1210a, the processor 175 can be configured to perform control such that a recovery command is transmitted to the redundant perception service 1210b through the orchestrator 1110.

Accordingly, the redundant perception service 1210b starts operating based on the recovery command. Accordingly, the stability of the sensor data-based perception service can be improved.

Meanwhile, when data transmission is in the stop state 1396 due to a failure in the main perception service 1210a, the processor 175 can deactivate the restart command to the main perception service 1210a.

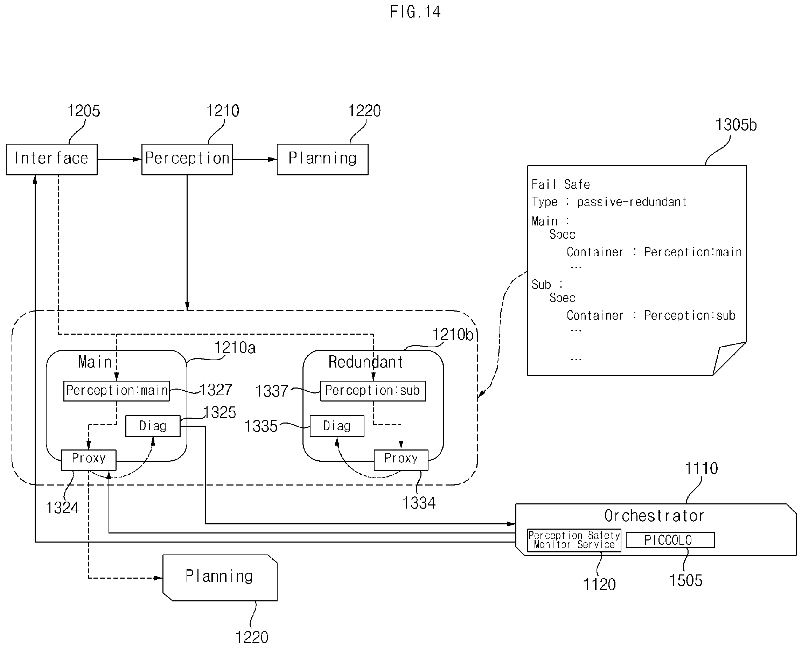

FIG. 14 is a diagram referenced in the description of the operation of the safety monitor service within the orchestrator.

Referring to the drawing, the processor 175 can receive sensor data through the interface 1205, perform the perception service 1210 based on the sensor data, and execute planning 1220 based on the results of the perception service 1210.

Meanwhile, the perception service 1210 can receive fail-safe data 1305b, as shown in the drawing.

For example, the fail-safe data 1305b can include both a main perception service and a redundant perception service for the sake of perception service.

Meanwhile, the orchestrator 1110 can be configured to execute the safety monitor service 1120, as shown in FIG. 11.

Meanwhile, the safety monitor service 1120 within the orchestrator 1110 can receive fail-safe data 1305b from the safety monitor service 1120.

Meanwhile, the processor 175 can be configured to perform control such that the main perception service 1210a remains active while the redundant perception service 1210b is in a standby state, based on the fail-safe data 1305b.

That is, the processor 175 can be configured to perform control such that the operation of the redundant perception service 1210b is paused during operation of the main perception service 1210a.

In the drawing, it is illustrated that a first perception service 132 is executed within the main perception service 1210a and a second perception service 1337 is executed within the redundant perception service 1210b, although various modifications are possible.

Meanwhile, the proxy router 1324 within the main perception service 1210a or the proxy router 1334 within the perception service 1210b can transmit perception result data to the planning 1220.

Meanwhile, an analysis module 1325 within the main perception service 1210a or an analysis module 1335 within the redundant perception service 1210b can compute and output the confidence level or confidence score of the main perception service 1210a or the redundant perception service 1210b, respectively.

Meanwhile, the orchestrator 1110 can further execute a gateway 1505.

Unlike the drawing, the gateway 1505 within the orchestrator 1110 can receive fail-safe data 1305b, and can distribute, monitor, or manage the fail-safe data 1305b to the perception service 1210 and the like.

Meanwhile, the gateway 1505 can receive the confidence level or confidence score of the main perception service 1210a or redundant perception service 1210b from the analysis module 1325 or the analysis module 1335.

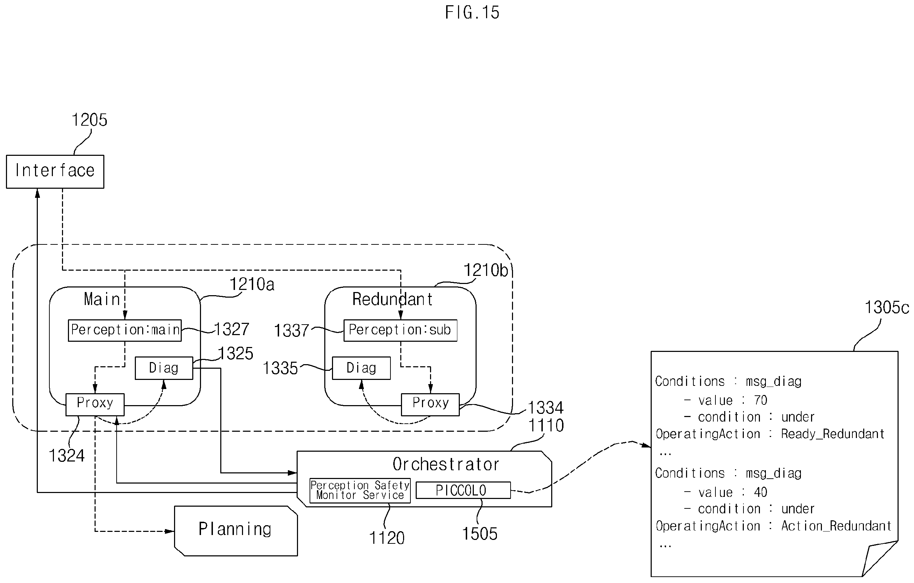

FIG. 15 is a diagram referenced in the description of the operation of the gateway of FIG. 14.

Referring to the drawing, the gateway 1505 can process or compute operation result data 1305c based on the confidence level or confidence score from the analysis module 1325 or the analysis module 1335.

Meanwhile, the gateway 1505 can be configured to perform control such that recovery operations are performed sequentially based on the confidence level or confidence score of the main perception service 1210a.

For example, when the confidence level or confidence score of the main perception service 1210a is at a first level (e.g., 70), the gateway 1505 can be configured to perform control such that the redundant perception service 1210b goes into a ready state.

In another example, when the confidence level or confidence score of the main perception service 1210a is at a second level (e.g., 40), the gateway 1505 can be configured to activate the redundant perception service 1210b.

That is, when the confidence level or confidence score sequentially decreases from the first level to the second level, the gateway 1505 can be configured to perform control such that the redundant perception service 1210b is sequentially transition from ready state to running state.

Accordingly, when the perception service 1210 is executed, a recovery mode can be performed using the redundant perception service 1210b. As a result, the stability of the sensor data-based perception service can be improved.

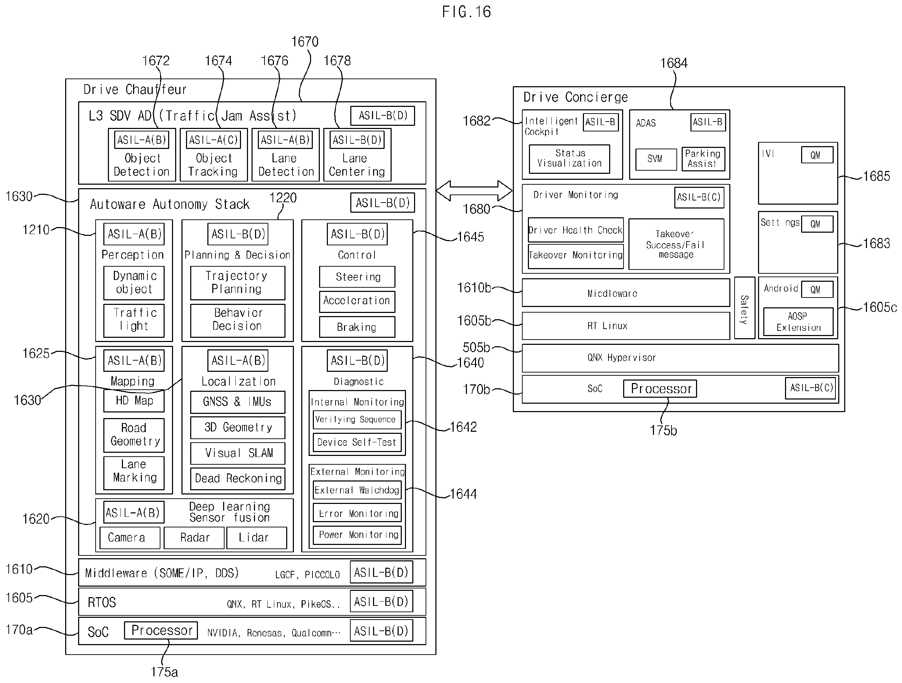

FIG. 16 is a diagram referenced in the description of the operation of a plurality of signal processing devices for autonomous driving.

Referring to the drawing, a processor 175a within a first signal processing device 170a can be configured to execute an operating system 1605 and execute middleware 1610 on the operating system 1605, in order to execute an autonomous driving application.

Meanwhile, the processor 175a within the first signal processing device 170a can be configured to execute, on the middleware 1610, a sensor fusion service 1620 for processing sensor data such as camera, radar, and LiDAR, a mapping service 1626 for HD maps, road geometry, and lane markings, a localization service 1630 for position information and 3D geometry, an analysis service 1640 including internal monitoring 1643 and external monitoring 1644, a perception service 1210, a planning service 1220, a control service 1645, and the like.

Meanwhile, the processor 175a within the first signal processing device 170a can be configured to execute a safety monitor service 1120, in addition to the perception service 1210.

Meanwhile, the processor 175a within the first signal processing device 170a can be configured to execute applications 1670 such as object detection 1672, object tracking 1674, lane detection 1674, and lane centering 1678 for traffic jam assist 1670.

Meanwhile, a second signal processing device 170b, which performs communication with the first signal processing device 170a via Ethernet or the like, can include the processor 175b.

Meanwhile, the processor 175b within the second signal processing device 170b can be configured to execute a hypervisor 505b, execute a first operating system 1605b on the hypervisor 505b, and execute middleware 1610b on the first operating system 1605b.

Meanwhile, the processor 175b within the second signal processing device 170b can be configured to execute, on the middleware 1610b, driver monitoring 1680, an intelligent cockpit 1682, and an advanced driver assistance system (ADAS) 1684.

Meanwhile, the processor 175b within the second signal processing device 170b can be configured to execute a second operating system 1605c separately from the first operating system 1605b on the hypervisor 505b and execute a configuration service 1683 and an IVI application 1685 on the second operating system 1605c.

Meanwhile, the processor 175b within the second signal processing device 170b can be configured to execute the perception service 1210 and the safety monitor service 1120.

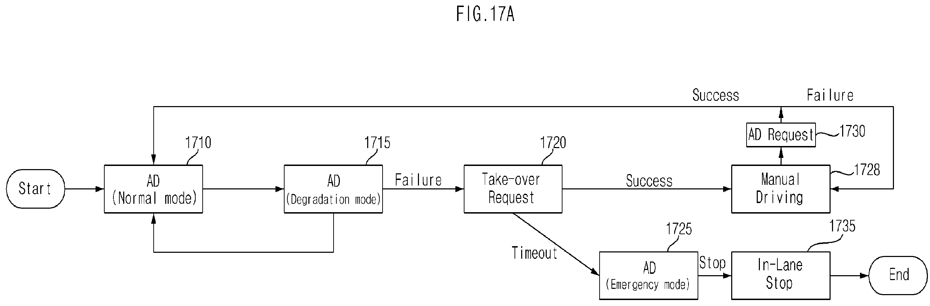

FIG. 17A is a diagram illustrating that various modes are executed.

Referring to the drawing, the processor 175 within the signal processing device 170 can be configured to execute a normal mode (S1710), and can be configured to execute a degradation mode based on the confidence level (S1715).

For example, the processor 175 can switch from the normal mode to the degradation mode based on the perception service (1210).

Specifically, as shown in FIG. 15, when the confidence level is at the first level, the processor 175 within the signal processing device 170 can be configured to execute the normal mode, and when the confidence level is at the second level lower than the first level, the processor 175 can stop the normal mode and execute the degradation mode.

Here, the degradation mode can include a recovery mode based on the operation of the redundant perception service 1210b.

Meanwhile, in the degradation mode, the processor 175 can be configured to reduce the vehicle speed or make steering adjustments. Accordingly, the usability of the perception service can be enhanced.

Meanwhile, upon a take-over request during execution of the degradation mode, the processor 175 can be configured to perform control such that either the emergency mode or the manual driving mode is executed.

For example, upon receiving a take-over request within a predetermined time during execution of the degradation mode (S1720), the processor 175 can be configured to perform control such that a manual driving mode is executed (S1728).

In another example, if no take-over request is received within the predetermined time during execution of the degradation mode, the processor 175 can be configured to perform control such that the emergency mode is executed (S1725). Then, according to the emergency mode, the processor 175 can be configured to perform control such that the vehicle is stopped (S1735).

That is, based on the perception service 1210, the processor 175 can be configured to perform control such that, upon a take-over request during execution of the degradation mode, the emergency mode is executed and then the vehicle is brought to a stop. Accordingly, the usability of the perception service can be enhanced.

Meanwhile, upon a request for autonomous driving during the execution of the manual driving mode (S1730), the processor 175 can be configured to perform control such that the normal mode for autonomous driving is performed again (S1710).

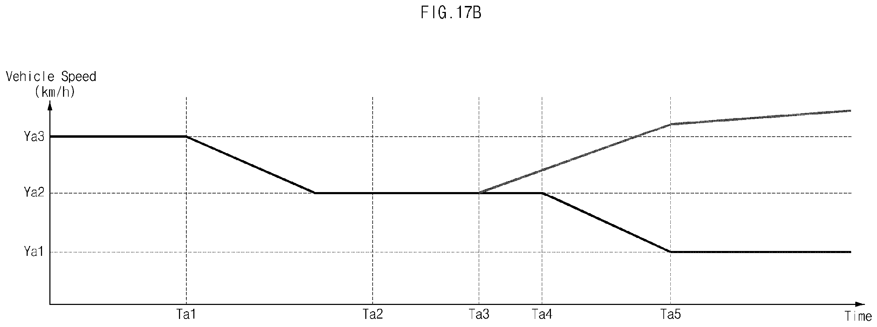

FIG. 17B is a diagram referenced in the description of FIG. 17A.

Referring to the drawing, the processor 175 can be configured to perform control such that the normal mode is executed until time Ta1. Accordingly, the vehicle speed can be approximately Ya3.

Meanwhile, based on the perception service 1210, the processor 175 can switch from the normal mode to the degradation mode.

That is, according to the degradation mode, the processor 175 can be configured to perform control such that the vehicle speed decreases to approximately Ya2 after time Ta1.

Meanwhile, according to the degradation mode, the processor 175 can be configured to perform control such that a consistent speed Ya2 is maintained for a predetermined period after the vehicle speed decreases.

Meanwhile, the processor 175 can be configured to perform control such that, upon a take-over request during execution of the degradation mode, either the emergency mode or the manual driving mode is executed.

For example, the processor 175 can be configured to switch to the manual driving mode upon receiving a take-over request within a predetermined time during execution of the degradation mode.

In the drawing, it is illustrated that, due to the transition to the manual driving mode, the vehicle speed increases starting from time Ts3.

In another example, if no take-over request is received within a predetermined time during execution of the degradation mode, the processor 175 can be configured to perform control such that the emergency mode is executed.

In the diagram, it is illustrated that, as the emergency mode is executed, the vehicle speed decreases starting from time Ta4.

That is, as the emergency mode is executed, the processor 175 can be configured to perform control such that the vehicle speed is reduced.

Meanwhile, as the emergency mode is executed, the processor 175 can be configured to perform control such that the vehicle eventually is brought to a stop after the decrease in vehicle speed. Accordingly, vehicle safety can be ensured.

In the drawing, it is illustrated that the vehicle speed is Ya1 at time Ta5, and Ya1 can correspond to the stopping of the vehicle.

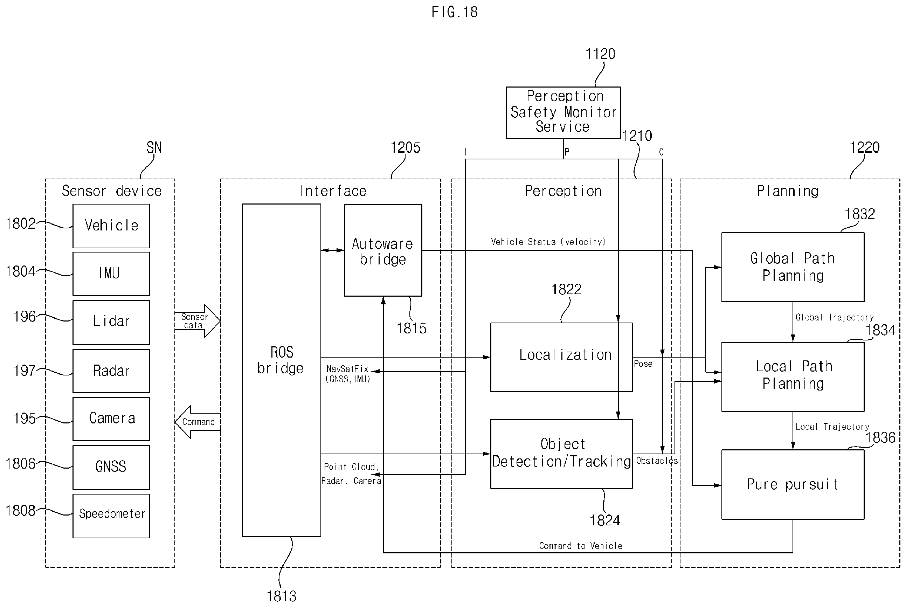

FIG. 18 is a diagram referenced in the description of a processor's operation for vehicle driving.

Referring to the diagram, the sensor device SN can include a vehicle sensor 1802, an inertial sensor 1804, a LiDAR 196, a radar 197, a camera 195, a position sensor 1806, and a speed sensor 1808.

Various sensor data from the sensor device SN can be inputted to the processor 175 within the signal processing device 170.

Meanwhile, the interface 1205 within the processor 175 can receive sensor data from the sensor device SN and transmit the sensor data to the perception service 1210.

To this end, the interface 1205 can be configured to execute or be equipped with a ROS bridge 1813 and an Autoware bridge 1815.

For example, the ROS bridge 1813 can transmit sensor data from the sensor device SN to the perception service 1210, and can transmit control commands from the perception service 1210 or the safety monitor service 1120 to the sensor device SN.

Specifically, the ROS bridge 1813 can transmit sensor data from the inertial sensor 1804 or the position sensor 1806 to localization 1822 within the perception service 1210.

Meanwhile, the ROS bridge 1813 can transmit sensor data from the LiDAR 196, radar 197, or camera 195 to object detection and tracking 1824 within the perception service 1210.

Meanwhile, the Autoware bridge 1815 can transmit speed data from the speed sensor 1808 or vehicle state data to the planning 1220.

Meanwhile, the perception service 1210 can be configured to execute the localization 1822 and the object detection and tracking 1824 for the sake of autonomous driving or driver assistance.

Meanwhile, the safety monitor service 1120 can monitor the perception service 1210.

Meanwhile, the planning 1220 can be configured to execute planning based on result data of the perception service 1210, for example, an obstacle or pose.

To this end, the planning 1220 can be configured to execute global path planning 1832, local path planning 1834, and pure pursuit 1836 in relation to the vehicle path.

For example, the global path planning 1832 and the local path planning 1834 can compute or execute path planning based on obstacle and pose data from the perception service 1210.

Meanwhile, the path pursuit 1836 can be configured to execute path pursuit based on local trajectory data from the local path planning 1834 and speed data or vehicle state data from the Autoware bridge 1815.

Meanwhile, when performing signal processing based on camera data from the camera 195 within the sensor device SN, it is difficult to know the exact distance to an object, and the signal processing is highly dependent on weather conditions.

Accordingly, the processor 175 can be configured to perform object detection of nearby objects such as pedestrians and bicycles, based on camera data from the camera 195.

Meanwhile, signal processing based on radar data from the radar 197 within the sensor device SN has drawbacks such as difficulty in identifying small objects and inability to classify objects.

In this regard, the processor 175 can be configured to perform recognition of distant objects, recognition of vehicles at night, or recognition of objects in rainy conditions, based on radar data from the radar 197.

Meanwhile, signal processing based on LiDAR data from the LiDAR 196 within the sensor device SN has drawbacks such as a shorter detection range than the radar 197 and sensitivity to weather conditions.

In this regard, the processor 175 can be configured to perform object recognition at medium ranges, recognition of vehicles at night, or recognition of small objects on the ground, based on LiDAR data from the LiDAR 196.

Meanwhile, the processor 175 can be configured to perform sensor fusion processing based on multiple sensor data.

For example, the processor 175 can be configured to perform a first object detection based on LiDAR data from the LiDAR 196, perform a second object detection based on camera data from the camera 195, and perform object matching based on the first object detection and the second object detection. Accordingly, object detection or matching can be performed more accurately.

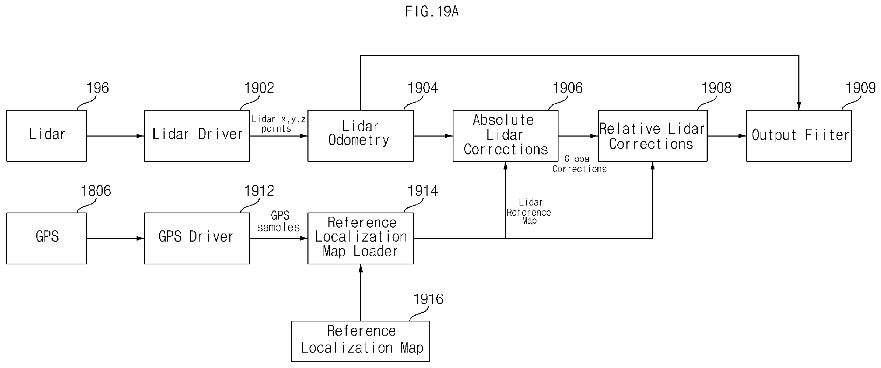

FIG. 19A is a diagram referenced in the description of localization in FIG. 18.

Referring to the drawing, the interface 1205 within the processor 175 can receive sensor data from the sensor device SN and transmit the sensor data to the perception service 1210.

For example, the interface 1205 within the processor 175 can receive LiDAR data from the LiDAR 196 and position data from the position sensor 1806.

Meanwhile, a LiDAR driver 1902 within the processor 175 can process the LiDAR data and output three-dimensional LiDAR data.

Meanwhile, a position information driver 1912 within the processor 175 can process the position data and output sample position data.

Meanwhile, a reference localization map loader 1914 within the processor 175 can output a LiDAR reference map based on a reference localization map 1916 and the sample position data.

Meanwhile, LiDAR odometry within the processor 175 can calculate the position of an object and output the calculated position information.

Meanwhile, a first corrector 1906 within the processor 175 can be configured to perform a first correction, which is a global correction, based on the LiDAR reference map and the calculated position information.

Meanwhile, a second corrector 1908 within the processor 175 can be configured to perform a second correction based on result data of the first corrector 1906 and the LiDAR reference map.

Meanwhile, an output filter 1909 within the processor 175 can filter result data of the second corrector 1908 and output it.

Accordingly, the localization 1822 within the processor 175 can be configured to perform localization based on LiDAR data or position data from the position sensor 1806.

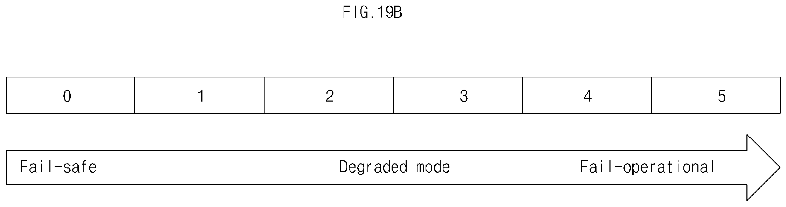

FIG. 19B is a diagram illustrating various modes that are executed in the processor.

Referring to the drawing, meanwhile, the processor 175 can be configured to execute a fail-safe mode, a degradation mode, or a fail-operation mode based on the perception service 1210.

In particular, the processor 175 can be configured to execute the fail-safe mode, degradation mode, or fail-operation mode based on the confidence level and the like.

In this instance, the fail-operation mode can correspond to the aforementioned normal mode, while the fail-safe mode can correspond to the aforementioned emergency mode or manual driving mode.

For example, the processor 175 can be configured to execute a redundancy service, e.g., a redundant perception service 1210b, according to the fail-operation mode.

Meanwhile, according to the degradation mode, the processor 175 can be configured to reduce the vehicle speed or make steering adjustments.

Meanwhile, the processor 175 can control the vehicle to operate in a manual driving mode which relies on the driver, according to the fail-safe mode.

Meanwhile, in the drawing, for convenience of explanation, it is illustrated that, when the confidence level is 0 or 1, the fail-safe mode is executed; when the confidence level is 2 or 3, the degradation mode is executed; and when the confidence level is 4 or 5, the fail-operation mode is executed.

That is, the processor 175 can be configured to perform control such that the fail-safe mode is executed when the confidence level is the lowest, and can be configured to perform control such that the fail-operation mode is executed when the confidence level is the highest.

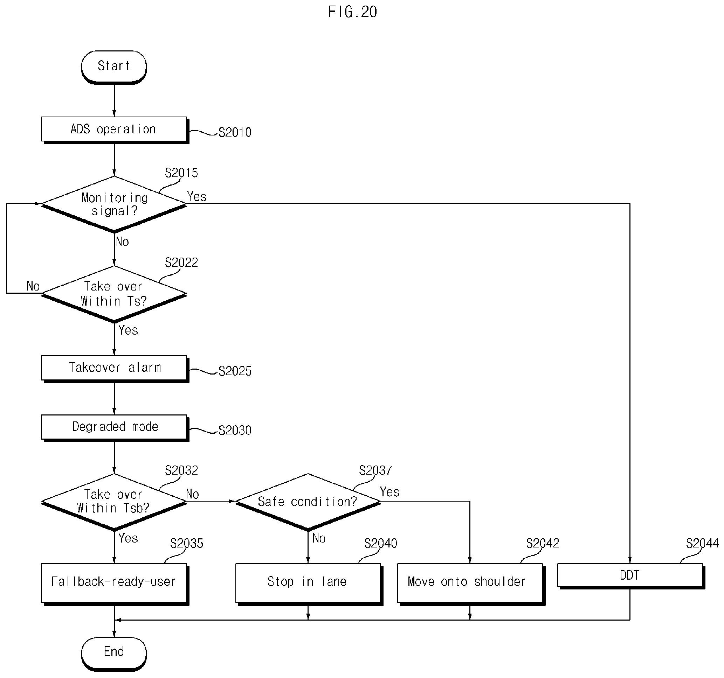

FIG. 20 is an exemplary flowchart illustrating an operation method for a signal processing device according to an embodiment of the present disclosure.

Referring to the drawing, the processor 175 within the signal processing device 170 can be configured to execute an autonomous driving or vehicle driving assistance application (S2010).

In this instance, the processor 175 can be configured to execute the perception service 1210 which performs perception based on sensor data and the safety monitor service 1120 which monitors the perception service 1210.

Meanwhile, the safety monitor service 1120 within the processor 175 can determine whether a monitoring signal has been received (S2015), and if so, can be configured to perform control such that a dynamic driving task is performed (S2044).

Meanwhile, if the monitoring signal has not been received, the safety monitor service 1120 within the processor 175 can be configured to reset components.

For example, the processor 175 can be configured to reset components that are executed in the processor 175 in the fail-safe mode. Accordingly, the usability of the perception service can be improved.

Meanwhile, the safety monitor service 1120 within the processor 175 can determine whether the monitoring signal has not been received and whether a take-over request has been made within a predetermined time Ts (S2022), and, if so, can be configured to perform control such that a take-over alarm notification is made (S2025).

In this case, the take-over request can be a request to switch to the degradation mode.

Also, the safety monitor service 1120 within the processor 175 can be configured to perform control such that the degradation mode is executed (S2030).

For example, the processor 175 can be configured to perform control such that the vehicle speed is reduced according to the degradation mode.

Next, during execution of the degradation mode, the processor 175 can determine whether a take-over request has been made within a second predetermined time Tsb, and, if so, can be configured to perform control such that the manual driving mode is executed (S2035).

Meanwhile, during the execution of the degradation mode, if the take-over request has not been made or if the take-over request exceeds the second predetermined time Tsb, the processor 175 can determine whether the vehicle is in a safe condition (S2037), and, if not in a safe condition, can be configured to perform control such that the vehicle stops in a lane as an emergency mode (S2040).

Meanwhile, if the vehicle is in a safe condition at step S2037, the processor 175 can be configured to perform control to change the lane and move to a shoulder(S2042).

Accordingly, the stability of the driving service can be improved while performing various modes.

Consequently, according to FIG. 20, when a monitoring signal is not received during the execution of the autonomous driving mode, the processor 175 can be configured to execute the fail-safe mode, and in response to the fail-safe mode falling, can be configured to execute the degradation mode. After the degradation mode, it can be configured to perform control such that an alternative operation is performed or the vehicle is stopped. Accordingly, the usability of the perception service can be improved.

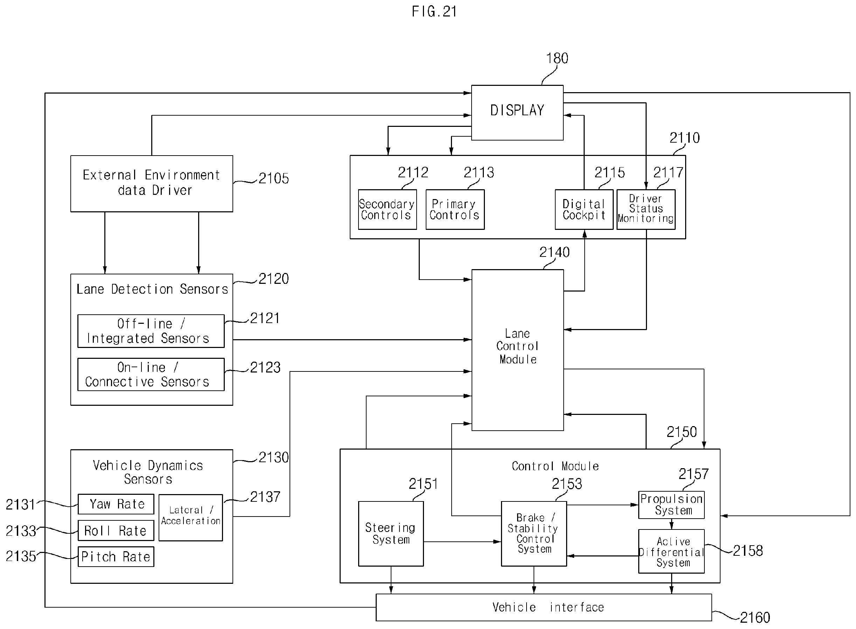

FIG. 21 is a diagram referenced in the description of FIG. 20.

Referring to the drawing, a lane control module 2140 within the signal processing device 170 can receive yaw rate 2131, roll rate 2133, pitch rate 2135, acceleration information 2137, and the like from vehicle sensor devices 2130.

Meanwhile, an external environment data driver 2105 can provide collected external environment data to lane detection sensors 2120 or the display 180.

Meanwhile, the lane control module 2140 within the signal processing device 170 can receive sensor data from an offline sensor 2121 or an online sensor 2123 among the lane detection sensors 2120.

For example, the sensor data from the offline sensor 2121 or the online sensor 2123 can include road curvature, lane markings, lane width, position information, road hazards, local map data, and the like.

Meanwhile, the lane control module 2140 can be configured to perform control such that lane control is performed based on sensor data from the vehicle sensor devices 2130 or from the lane control module 2140.

For example, the lane control module 2140 can output steering information, braking information, torque information, and the like based on the sensor data.

Meanwhile, a steering module 2151 within the control module 2150 can output a steering control signal to the vehicle interface 2160 based on the steering information.

Meanwhile, the steering module 2151 within the control module 2150 can output a steering control signal to the vehicle interface 2160 based on the steering information.

Meanwhile, a braking module 2153 within the control module 2150 can output a braking control signal to the vehicle interface 2160 based on the braking information.

Meanwhile, a propulsion module 2157 within the control module 2150 can output a propulsion control signal based on the propulsion information.

Meanwhile, an active differential module 2158 within the control module 2150 can output an acceleration control signal to the vehicle interface 2160 based on the propulsion information and the like.

Meanwhile, vehicle state information, etc. outputted from the lane control module 2140 can be transmitted to a display interface 2110.

Meanwhile, the display interface 2110 can output primiary control information 2113, secondary control information 2112, cockpit information 2115, driver state monitoring information 2117, and the like, so that they are displayed on the display 180.

It will be apparent that, although the preferred embodiments have been shown and described above, the present disclosure is not limited to the above-described specific embodiments, and various modifications and variations can be made by those skilled in the art without departing from the gist of the appended claims. Thus, it is intended that the modifications and variations should not be understood independently of the technical spirit or prospect of the present disclosure.

## Claims

1. A signal processing device comprising a processor configured to execute a hypervisor,
wherein the processor is configured to execute, on the hypervisor, a perception service configured to perform perception based on sensor data and a safety monitor service configured to monitor the perception service, and execute a recovery mode based on a redundant perception service while executing the perception service.

2. The signal processing device of claim 1, wherein safety monitor service is configured to operate the redundant perception service during operation of the perception service, and, upon occurrence of a failure in the perception service, transmit a recovery command to the perception service and an activity command to the redundant perception service.

3. The signal processing device of claim 1, wherein the safety monitor service is configured to pause the redundant perception service during operation of the perception service, and, upon occurrence of a failure in the perception service, transmit a recovery command to the perception service and an activity command to the redundant perception service.

4. The signal processing device of claim 1, wherein safety monitor service is configured to control switching between the perception service and the redundant perception service based on monitoring data or analysis data from the perception service or the redundant perception service.

5. The signal processing device of claim 1, wherein safety monitor service is configured to change criteria for switching between the perception service and the redundant perception service based on monitoring data or analysis data from the perception service or the redundant perception service.

6. The signal processing device of claim 1, wherein safety monitor service is configured to update to a monitoring module or management module within the perception service or the redundant perception service.

7. The signal processing device of claim 1, wherein the safety monitor service is configured to change a mode for planning or control of vehicle operation based on a confidence level.

8. The signal processing device of claim 1, wherein the processor is configured to perform the perception service for autonomous driving, assisted vehicle driving, or driver monitoring based on the sensor data.

9. The signal processing device of claim 1, wherein the processor is configured to perform the perception service for active steering, lane keeping, emergency braking, automatic lane change, or traffic jam pilot based on the sensor data.

10. The signal processing device of claim 1, wherein the processor is configured to execute localization based on a vehicle driving condition, weather information, and the sensor data, execute the perception service based on the localization, execute planning based on the perception service, and output a vehicle control signal based on the planning.

11. The signal processing device of claim 1, wherein the perception service corresponds to one of a plurality of microservices for application execution.

12. The signal processing device of claim 1, wherein the perception service corresponds to a microservice for performing object detection, object tracking, lane detection, or lane keeping.

13. The signal processing device of claim 1, wherein the processor is configured to switch from a normal mode to a degradation mode based on the perception service or execute an emergency mode or manual driving mode based on a take-over request during execution of the degradation mode.

14. The signal processing device of claim 1, wherein the processor is configured to stop the vehicle after performing an emergency mode based on a take-over request during execution of a degradation mode, based on the perception service.

15. The signal processing device of claim 1, wherein the processor is configured to perform object detection or object tracking based on the perception service.

16. The signal processing device of claim 1, wherein the processor is configured to execute a fail-safe mode, a degradation mode, or a fail-operation mode based on the perception service.

17. The signal processing device of claim 1, wherein the processor is configured to execute a fail-safe mode in response to no monitoring signal being received during execution of an autonomous driving mode, to execute a degradation mode in response to the fail-safe mode falling, and to perform an alternative operation or stop the vehicle after the degradation mode.

18. The signal processing device of claim 17, wherein the processor is configured to reset components in the fail-safe mode.

19. The signal processing device of claim 17, wherein the processor is configured to reduce the vehicle speed or make steering adjustments in the degradation mode.

20. A vehicle display device comprising:
at least one display; and
a signal processing device configured to output an image signal to the display,
wherein the signal processing device includes the signal processing device according to any one of claims 1 to 19.
